# EUROPEAN PATENT APPLICATION

(11) **EP 3 310 003 A1**
(43) Date of publication of application: **18.04.2018**
(21) Application number: 17158201.8
(22) Date of filing: 27.02.2017
(51) Int. Cl.: H04L 12/28

(54) **HOME NETWORK, ELECTRONIC DEVICE, PROCESSING UNIT AND DISPLAY METHOD**

(30) Priority: 12.10.2016 JP 2016200967
(71) Applicant: Kabushiki Kaisha Toshiba, Tokyo 105-8001 (JP); Toshiba Visual Solutions Corporation, Misawa-shi, Aomori 033-0036 (JP)
(72) Inventor: Kawachi, Reiko, Aomori, 033-0036 (JP); Izawa, Hidehito, Aomori, 033-0036 (JP); Honsawa, Kunio, Aomori, 033-0036 (JP); Nomoto, Hiroyuki, Aomori, 033-0036 (JP); Yakuwa, Yukinori, Tokyo, 198-0024 (JP)
(74) Representative: Henkel, Breuer & Partner

(57) **Abstract**

According to one embodiment, a home network (1000) characterized by includes an information processing module (600) which specifies a device to be operated in association with input information, and outputs a control signal to control an operation of the device, and a storage (1100) which stores a condition for the information processing unit to control the operation of the device and information to specify the device based on the input information.

## Description

Embodiments described herein relate generally to a home network, an electronic device, a processing unit.

In recent years, sensors, switches and controllers (control terminals) which can be used for realization of home security, home automation or home energy management are marketed by various makers (manufacturers). Many of these sensors, switches and control terminals are designed to be in conformity with the standardized specifications, or more specifically, they are, for example, based on IEEE802.15.4 and use 2.4GHz bandwidth (radio wave), or on 802.15.4e using 900MHz band, or on 802.15.11 using 2.4GHz band.

On the other hand, there are quite a few sensors, switches or control terminals designed based on original standards of the manufacturers (makers). Moreover, even if designed in conformity with the standards, they may be functionally original, including various cases, for example, where a single sensor has various functions and the control method thereof is unique to the manufacturer's system.

There are many requests that the sensors, switches, control terminals already on the market be controlled collectively, and in reply to such requests, regional communication units (home gateway, to be referred to as HGW hereinafter) have been put into practical use, in which individual sensors, switches and control terminals are communicating each other to be able to control each other. The HGW is required to be able to support and control as many sensors, switches and control terminals as possible regardless of the manufacturer (maker) or the standards on which they are based. Further, it is also one of the requests of the market that there should not be necessary to replace (exchange) the sensors, switches or control terminals which are already installed.

Moreover, there are also many requests that these sensors, switches and control terminals be controlled by voice. Further, even if individual sensors, switches or control terminals, which are located distant are to be controlled by voice, it is required that they can be controlled without having to be near them more than necessary. Similarly, even if individual sensors, switches or control terminals are distant (or not in sight), it is requested that they should be controllable. Furthermore, when controlling sensors, switches or control terminals by voice, it is requested that each of them should be controlled by natural conversational expressions.

In addition, when incorporating a device to a home network using the HGW, without replacing the sensors, switches or control terminals already installed, it is requested that the incorporating work and procedure should not impose a burden on the operator (user). If the work and procedure which incorporate sensors, switches or control terminals into a home network are complicated, the number of sensors switches or control terminals which can be actually added is limited, which may result in abortion of the installation of these with the number less than essentially required of sensors, switches or control terminals. In this case, the functions of home security, home automation or home energy management which could have been realized by the home network will be restricted as a result.

An object of the present embodiment is to provide a home network, an electronic device, a processing unit and a display method.

A general architecture that implements the various features of the embodiments will now be described with reference to the drawings. The drawings and the associated descriptions are provided to illustrate the embodiments and not to limit the scope of the invention.
FIG. 1 shows an example of an environment to which the home network according to an embodiment;
FIGS. 2A, 2B and 2C show an example of an environment to which the home network according to an embodiment;
FIG. 3 shows an example of a screen display for initialization in the home network according to an embodiment;
FIG. 4 shows an example of a screen display for setting in the home network according to an embodiment;
FIG. 5 shows an example of a screen display for setting in the home network according to an embodiment;
FIG. 6 shows an example of a screen display for setting in the home network according to an embodiment;
FIG. 7 shows an example of a screen display for setting in the home network according to an embodiment;
FIG. 8 shows an example of a screen display for setting in the home network according to an embodiment;
FIG. 9 shows an example of a screen display for setting in the home network according to an embodiment;
FIG. 10 shows an example of a division (zone) position information (data table) to be referred to by the home network according to an embodiment;
FIG. 11 shows an example of a screen display for setting in the home network according to an embodiment;
FIG. 12 shows an example of a screen display for setting in the home network according to an embodiment;
FIG. 13A shows an example of a procedure of installation of a to-be-controlled device, to which the home network according to an embodiment;
FIG. 13B shows an example of a procedure of installation of a to-be-controlled device, to which the home network according to an embodiment;
FIG. 13C shows an example of a procedure of installation of a to-be-controlled device, to which the home network according to an embodiment;
FIG. 13D shows an example of a procedure of installation of a to-be-controlled device, to which the home network according to an embodiment;
FIG. 13E shows an example of a procedure of installation of a to-be-controlled device, to which the home network according to an embodiment;
FIG. 13F shows an example of a procedure of installation of a to-be-controlled device, to which the home network according to an embodiment;
FIG. 13G shows an example of a procedure of installation of a to-be-controlled device, to which the home network according to an embodiment;
FIG. 13H shows an example of a procedure of installation of a to-be-controlled device, to which the home network according to an embodiment;
FIG. 13I shows an example of a procedure of installation of a to-be-controlled device, to which the home network according to an embodiment;
FIG. 14 shows an example of information in a zone (data table) to which the home network according to an embodiment;
FIG. 15A shows an example of information on characteristics of a sensor (data table) to which the home network according to an embodiment;
FIG. 15B shows an example of information on characteristics of a sensor (data table) to which the home network according to an embodiment;
FIG. 15C shows an example of information on characteristics of a sensor (data table) to which the home network according to an embodiment;
FIG. 15D shows an example of information on characteristics of a sensor (data table) to which the home network according to an embodiment;
FIG. 15E shows an example of information on characteristics of a sensor (data table) to which the home network according to an embodiment;
FIG. 16A shows an example of intention interpretation rule (data table) to which the home network according to an embodiment;
FIG. 16B shows an example of intention interpretation rule (data table) to which the home network according to an embodiment;
FIG. 16C shows an example of intention interpretation rule (data table) to which the home network according to an embodiment;
FIG. 17A shows an example of a sensor control (data table) to which the home network according to an embodiment;
FIG. 17B shows an example of a sensor control (data table) to which the home network according to an embodiment;
FIG. 18 shows an example of a home gateway (HGW) usable in the home network according to an embodiment;
FIG. 19A shows an example of a procedure of installation of a to-be-controlled device, to which the home network according to an embodiment;
FIG. 19B shows an example of a procedure of installation of a to-be-controlled device, to which the home network according to an embodiment;
FIG. 19C shows an example of a procedure of installation of a to-be-controlled device, to which the home network according to an embodiment;
FIG. 20A shows an example of a procedure of installation of a to-be-controlled device, to which the home network according to an embodiment;
FIG. 20B shows an example of a procedure of installation of a to-be-controlled device, to which the home network according to an embodiment; and
FIG. 20C shows an example of a procedure of installation of a to-be-controlled device, to which the home network according to an embodiment.

Various embodiments will be described hereinafter with reference to the accompanying drawings.

In general, according to one embodiment, an electronic device comprising: an information processor which specifies a device to be operated in association with input information, and outputs a control signal to control an operation of the device; and a storage which stores a condition for the information processing unit to control the operation of the device and information to specify the device based on the input information.

Embodiments will now be described hereinafter in detail with reference to the accompanying drawings.

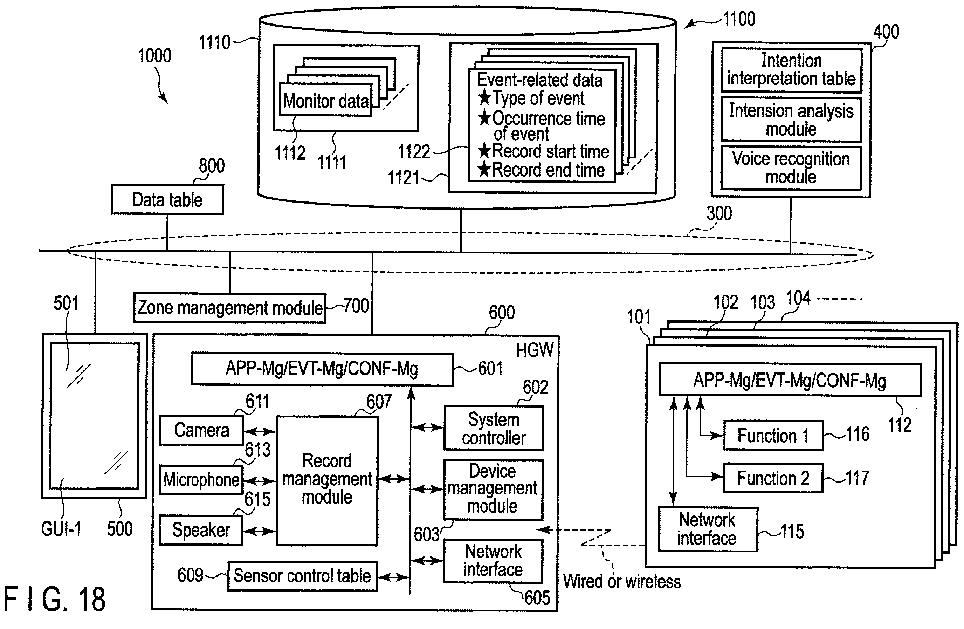

An example of the home gateway (to be referred to as HGW hereinafter) usable in the home network 1000 of the embodiment will be described with reference to FIG. 18.

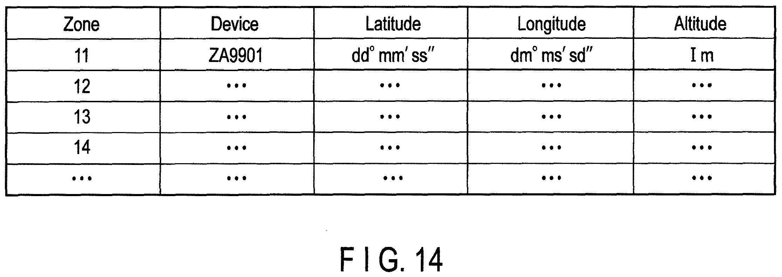

In FIG. 18, a server 1100 is connectable to HGW 600 of the home network 1000 through the Internet (network) 300. To the network 300, a voice processing unit 400, an input device (smartphone [personal digital assistant device]) 500, a zone management module 700, a data table 800 and the like are connected. The zone management module 700 and the data table 800 store various data described with reference to FIGS. 14, 15A, 15B, 15C, 15D, 15E, 16A, 16B, 16C, 17A and 17B. At least one of the voice processing unit 400, the zone management module 700, the data tables 800 and the recording medium 1110 (the server 1100), may be integrated with the HGW 600 as one body.

The HGW 600 comprises a control data management module 601, a system controller 602, a device manager 603, a network interface (to be referred to as network I/F hereinafter) 605, a record manager 607, a camera 611, a microphone 613, a loudspeaker 615 and the like. Further, the HGW 600 includes a sensor control table 609.

The control data Management module 601 includes an application manager (to be abbreviated as APP-Mg hereinafter), an event manager (to be abbreviated as EVT-Mg hereinafter) and a configuration manager (to be abbreviated as CONFIG-Mg hereinafter). The APP-Mg manages a plurality of applications for controlling various operations of the HGW 600. The EVT-Mg manages event applications for controlling various operations resulting from occurrences of various events and the like, which will be described later. The CONF-Mg manages configuration applications, which recognizes functions in the HGW 600 and various functions related with the HGW 600 and performs, for example, the ranking of operations, the restriction of operations, etc.

The system controller 602 can centralize and control all blocks in the HGW 600 in total. The system controller 602 controls the blocks especially in the HGW 600 sequentially (the embodiment includes the association (cooperation) of the operations of one or more sensors, switches or control terminals with one instruction time serially or at a predetermined timing). Note that the operation association (cooperation) may include two or more operations of cases classified according to a predetermined rule.

The EVT-Mg can control the camera 611, the microphone 613, the loudspeaker 615, the record manager 607 and the like. Further, the EVT-Mg can judge detection data of an external sensor taken from the network I/F 605 and the data from the camera 611, the microphone 613 and the loudspeaker 615, and control the following action and behavior (classification of operations). The CONFG-Mg can set up the initial setting of each functional block inside the HGW 600, restriction of a function, extension of a function, a priority order, operating time, etc.

The device manager 603 can authenticate other devices operating in relation to the HGW 600 and register them into a memory (storage device). Therefore, the device manager 603 can manage other sensors 101, 102, 103 and so on, connected through the network I/F 605. Moreover, the identification data of the server 1100 connected through the Internet 300 has been also registered in the device manager 603 so as to be recognized. Furthermore, the identification data of smartphone GUI-1 (screen display 501) and the like connected through the Internet 300 have also been registered in the device manager 603 so as to be recognized.

Moreover, the sensor control table 609 stores the names (device IDs/names) of each of the sensors, switches which will be described later, or the control terminals 101, 102, and 103, ..., the position information of each of the sensors, switches and control terminals, and the data for controlling each sensor. Further, the name and position information of each sensor, switch or control terminal can be displayed on GUI-1 of the smartphone 500, and thus, the user (operator/user) can check the type, installation location, function and the like of each sensor, switch or control terminal.

The network I/F 605 is connected to the sensors or the switches 101, 102 and 103 with the sensor function placed at arbitrary locations in the house via short-distance radio. Note that in FIG. 18, the structure of the sensors or the switches 101, 102, and 103 with sensing functions is assumed to be an active type having two or more functions. In FIG. 18, the sensors 102, 103 ... are represented by one sensor, the sensor 101.

The sensor 101 includes a control data management module 112 and a network I/F 115. The sensor 101 comprises a function 1 (first sensing function) 116 and function 2 (second sensing function) 117 as sensing elements. The type of the sensor is not limited to this, but various types can be used. Naturally, if the other sensors or switches or the control terminals 101, 102, 103, ..., are switches, they mainly control the devices connected to switch them ON/OFF according to input signals. Note that the switches may comprise, for example, a timer function, which may operate to switch OFF after an elapse of X minutes (X is a positive integer) from a switch ON, for example. Moreover, the switches may be combined with a temperature sensor or an infrared sensor, to switch ON, for example, when the temperature reaches a preset temperature or when a member which has a specific temperature (generation of heat) is detected.

The control data Management module 112 includes an application manager (APP-Mg), an event manager (EVT-Mg) and a configuration manager (CONFIG-Mg). The CONFIG-Mg manages various applications for controlling the sensor 101 and the operation of the entire system which cooperates with the sensor 101 (related with the sensor 101). The EVT-Mg manages the event application for the sensor 101 to execute the next operation based on detection data from the function 1 (the first sensing function) 116 and the function 2 (the second sensing function) 117. The function 1 (the first sensing function) 116 and the function 2 (the second sensing function) 117 comprise various types of elements according to the purpose of the sensing. The various types of elements include, for example, a camera and a microphone as in the case of the HGW 600. The various types of elements include, for example, a thermal sensor, a temperature sensor, a moisture sensor, a lighting sensor, a pressure sensor, a switch, etc. The sensor 101 may comprise one or more sensing elements for its purpose of usage.

The sensors 101, 102, 103, ..., may be, for example, a sensor which detects open/close of a door or a window, a sensor which detects generation of a sound louder than a certain degree, a sensor (motion detection/infrared rays) which detects a motion of a person, a sensor which detects an abnormality (shock) of a door or a window, a sensor (camera) which performs shooting of the scene, a sensor which detects the temperature, a sensor which detects the brightness, etc., which are placed at various locations in the house. The open/close detection sensor or open detection sensor should desirably be of a two-circuit type which integrally prepare a first circuit which outputs an output signal the time of opening and a second circuit which outputs an output signal at the time of non-opening (close) so as to be able to detect a failure of the sensor itself. For example, as a sensor which detects open/close of a curtain, a sensor which is turned on when the curtain opens (is opened), and a sensor which is turned on when the curtain closes (is closed) are combined. Thus, even if one sensor breaks down, the HGW 600 is able to easily detect the abnormality.

In the above system, in a case detection signals are output from any one or some of a sensor 611 (camera), a sensor 613 (microphone) provided in the HGW 600, and the sensors 101, 102, ..., placed at arbitrary locations, the control data management module 601 recognizes the signal as an event. Then, the control data management module 601 controls the camera (sensor) 611 through the record manager 607. Thus, the camera 611 sends monitor data which is cached before the event is issued (for example, before 10 minutes) to a recording medium through the record manager 607 and the control data management module 601, and keeps sending the subsequent monitor data captured at every time period (for example, 3, 5, 10, 20, or 30 minutes). In addition to the monitor data, event-related data (also referred to as event attribute data) when the event is detected is also sent to a recording medium 1110 (storage device/memory) in this system.

The event-related data may include any one or some of an occurrence time of the event, a sensor type (sensor ID) which detects the event, location data of the sensor, a record start time, and a record end time.

Further, in FIG. 18, the recording medium 1110 is, for example, a memory in the server 1100, but may be not necessarily a recording medium in the server 1100. A storage location of the monitor data may be the recording medium in the HGW 600, or may be a recording medium which is connected through the network I/F 605. The recording medium 1110 includes a data region 1111 and a manage region 1121. Monitor data 1112 is stored in the data region 1111, and event-related data 1122 is stored in the manage region 1121.

The monitor data 1112 may include not only video data but also measurement data from a sensor. For example, a variation in temperature, a variation in humidity, or a variation in pressure of a specific place may be included. Management data is described in the manage region 1121 to reproduce the monitor data. The management data also includes the event-related data. The management data includes the event-related data and a record address of the monitor data corresponding to the event-related data. In a case where a plurality of events are issued, there are a plurality of pieces of event-related data and a plurality of pieces of monitor data corresponding to the plurality of pieces of event-related data.

The event-related data includes types of events (also referred to as sensors). In addition, the monitor data (for example, monitor video) is recorded based on the event, and the event-related data also includes the record start time and the record end time.

By the way, there is a need to register control target devices (hereinafter, referred to as target devices, or simply referred to as devices in some cases) such as various types of sensors, switches, or control terminals in the home into a device management module in order for the HGW 600 to operate as described above. Hereinafter, the register device will be described.

### <Relation between Application Space and HGW>

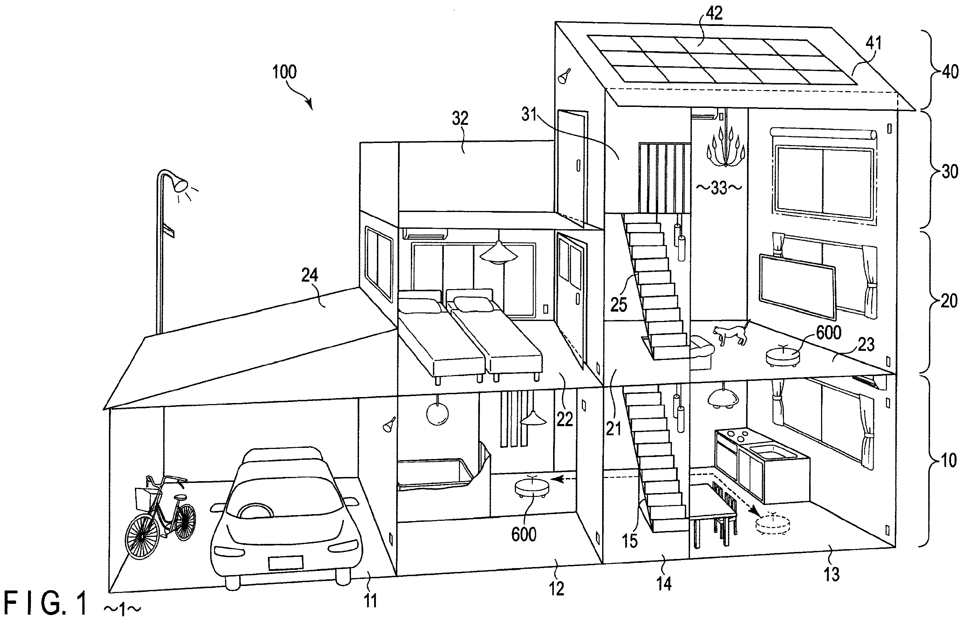

FIG. 1 illustrates a space (front opening room layout) where a home network 1000 and a setting method (setting assist method) of an embodiment are applicable. In this space, there are various target devices which can receive and transmit signals with respect to the home network 1000.

A sensor and a camera which captures a video are assumed as the target device, but the target device is not limited thereto. Any device having various functions such as detecting that an ambient circumference reaches a certain condition may be employed.

The target device is connected to the home network 1000 through a communication unit in the area. Each of the target devices provides an operation state and arbitrary data to the home network 1000 through a protocol communication determined in every device or a specifically-formatted signal.

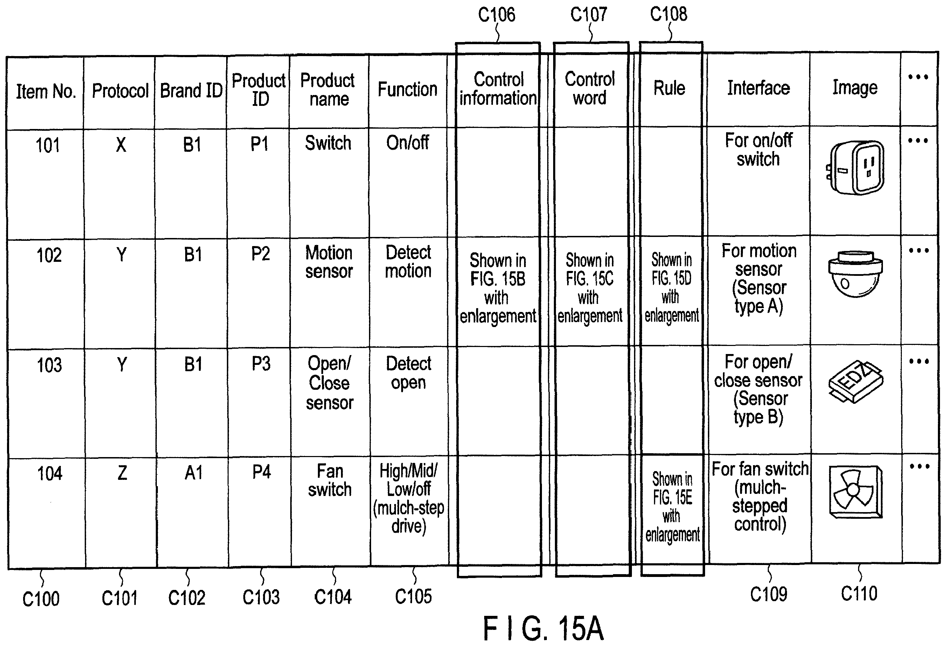

Each of the target devices receives control information from the home network 1000 through the HGW 600 according to a protocol determined in every target device or a specific format of control data which is provided by various manufacturers and prepared for the HGW 600 to control the above target devices. Then, the target devices operate based on the received control information or control data. Further, the specific format of control data may be acquired through the server 1100 or from the data table 800 connected to the HGW 600 in order to control the operation of the target device (that is, the sensor 101) and the entire system (associated with the sensor 101) linked to the sensor 101 (see, for example, FIGS. 15A, 15B, 15C, 15D, 15E, 16A, 16B, 16C, 17A, and 17B for the format of data). In addition, the acquired specific format of control data is mutually recognizable in the sensor 101 and in the entire system (associated with the sensor 101) which is cooperated with the sensor 101, and may be updated from the HGW 600 (to the target device) as needed.

In a case where the target device is a sensor or a camera, the detecting and output conditions may be changed from the outside through the HGW 600. In a case where the target device is a sensor, a threshold (detection criteria) level for detecting the detection target and notifying can be changed in the HGW 600. In addition, in a case where the target device is a sensor, a detection timing (detection interval) and a non-detection time may be set. In addition, in a case where the target device is a camera, a non-capturing period (off time) may be set or the non-capturing period may be arbitrarily changed. Naturally, the user may capture an image by directly instructing a capture timing of the camera. Even in such a case, the user may set a capturing of a still image, a continuous shooting every a certain period (moving image), or an interval capturing every a certain period during a certain period. In addition, the capturing of the still image may be performed by a predetermined number of times at a time point instructed by the user.

In addition, the HGW 600 connects the home network 1000 and an external network (for example, the Internet or a cloud). The HGW 600 may supply, for example, control information or a specific format of control data (which will be described below using FIGS. 15A, 15B, 15C, 15D, 15E, 16A, 16B, 16C, 17A, and 17B) to the target device which is determined based on an operation state and/or arbitrary data received from the target device. The specific format of control data includes, for example, a control word (expressed by voice) associated with the control information or a determination condition to be cooperated from the control word.

Further, the HGW 600 can receive a user's instruction (operation input) from a terminal device carried by the user (for example, the smartphone or the tablet (PC)) by an arbitrary communication format (protocol) supported by the HGW 600. In addition, the HGW 600 can provide a message and a predetermined format of output signal to the smartphone or the tablet (PC) carried by the user as needed using an arbitrary communication format (protocol) supported by the smartphone or the tablet.

The space illustrated in FIG. 1 includes at least one floor (story/level) or one partitioned region. The space is, for example, a building having a relatively small target region of the network in which a wireless communication is mainly used, and a finite space in a predetermined range around the building. The building is desirably, for example, a general house, a small business space (retail store), or a small office. The building may be, for example, a hospital, a facility for infants, or a facility of aged people.

As a network (home network 1000) using the wireless communication, there is desirably used a network complying with a standard defined in an international organization (for example, IEEE (Institute of Electrical and Electronics Engineers)). As a network, there are desirably used a network (Bluetooth (registered trademark)) which complies with IEEE 802.15.1 and uses a 2.4 GHz radio wave, a network (Zigbee (registered trademark)) which complies with IEEE 802.15.4 and uses a 2.4 GHz radio wave, and a network (Z-Wave (registered trademark)) which complies with IEEE 802.15.4e and uses a 900 MHz radio wave. As an available network, a network (Wi-Fi (registered trademark)) which complies with IEEE 802.11 and uses a 2.4 or 2.5 GHz radio wave, a network (Wi-MAX (registered trademark)) which complies with IEEE 802.15.16e and uses a 2.5 GHz radio wave, and a network (Wi-SUN (Smart Utility Network)) which complies with IEEE 802.15.4g and uses a 2.4 GHz radio wave may be exemplified.

Hereinafter, the description will be given on an assumption that an applicable space of the home network 1000 and the setting assist method illustrated in FIG. 1 is a general building (house) and a finite space within a predetermined range around the building. Further, the building and the finite space around the building may be referred to as "in a site" or simply "site".

### <Specific Example of Space of Embodiment>

In FIG. 1, a building 100 includes a first floor (story) 10 which is placed at a height (also referred to as altitude) substantially equal or slightly higher than a reference surface in a site (finite space) 1 (for example, the ground surface), a second floor (story) 20 which is place at a height higher by a certain height compared to the first floor 10, and a third floor (story) 30 which is placed at a height higher by a certain height compared to the second floor 20. In the three-story building 100 illustrated in FIG. 1, a portion at an altitude higher than the third floor 30 may be identified as a fourth floor 40. Further, the fourth floor 40 in FIG. 1 may be referred to as the uppermost floor. Naturally, the number of floors (stories) is arbitrary, and the second floor 20 will be the uppermost floor in a case there is only the first floor 10. In addition, the uppermost floor may be referred to as a roof. The roof (uppermost floor) is not necessarily constructed separately as a roof, and may be formed flat for example.

In the building 100 illustrated in FIG. 1, various devices operated by power provided from a commercial power source and/or a battery (including fuel cells) are disposed in a first zone 11 to a fourth zone 14 of the first floor 10, a first zone 21 to a fourth zone 24 of the second floor 20, and a first zone 31 to a third zone 33 of the third floor 30. As the devices, a television broadcasting receiving device (also referred to as TV), an illumination device, a door locking device, a window open/close device, a curtain (screen) open/close device, an air conditioner, an elevator, a personal computer (also referred to as PC), a printer, an electronic range (microwave oven), a toaster, an electromagnetic cooker (IH (Induction Heating) stove (range/stove)), a vacuum cleaner, a washing machine, a fan, a rice cooker, a refrigerator, a telephone, a charging equipment, and/or plug sockets or switches providing power these devices, sensors realizing predetermined functions are known for example. In addition, in recent years, a power generating device, a smartmeter (power meter), a heat recycling (cogeneration/tri-generation) device, an electrical storage device, and a monitor camera are also included as the devices. Further, most of the sensors are used to detect whether a required detection output (detection result) reaches an output condition, and nowadays it is realized that the output condition can be changed from the outside. In addition, some of sensors have a function of setting a plurality of output conditions of the detection output and/or a function of detecting the detection outputs under different conditions. Further, it is desirable that the HGW 600 can automatically move in the same floor or the respective zones described below.

The first floor 10 includes at least the first zone 11, the second zone 12, the third zone 13, and the fourth zone 14 which are partitioned by a predetermined area. However, the number of zones is arbitrary, and the first floor may include only one zone. The first zone 11 is, for example, a zone which is placed at the same height as that of the ground surface and partitioned by a certain size (area), and may be a garage (also referred to as car barn), a barn, or a storage space. The second zone 12 is a zone which is adjacent to the first zone 11 and placed at a height higher by a certain height compared to the first zone 11, and is a space which has no wall surface partially such as an entrance and a corridor. The third zone 13 is a space in which at least a portion is connected to the second zone 12 in the same plane and which is placed at substantially the same height as the second zone 12, and may be a dining room (also referred to as a first sitting room, a living room of the first floor, or a back room of the first floor). The fourth zone 14 is a zone which is connected to the second zone 12 and the third zone 13, and in which at least a portion is placed at the same height as the second zone 12, and may be a staircase (also referred to as staircase of the first floor, below staircase, or down staircase).

The second floor 20 includes at least the first zone 21, the second zone 22, and the third zone 23 which are respectively partitioned by a predetermined area. Further, a portion corresponding to the room of the first zone (garage) 11 of the first floor 10 is also referred to as the fourth zone 24. In addition, the number of zones is arbitrary, and one floor may be formed only by one zone. The first zone 21 is a staircase which is connected to the fourth zone 14 of the first floor 10, and includes a first staircase 15 which connects the first floor (the first floor 10) and the second floor (the second floor 20) to allow the occupant to move therebetween. The second zone 22 is a space in which at least a portion is connected to the first zone 21 and which is placed at substantially the same height as the first zone 21, and may be a bed room (also referred to as a second living room, a room beside the car barn, and oo (for example, the name of family such as father) room). The third zone 23 is a zone of which at least a portion is connected to the first zone 21 and which is placed at the same height as the first zone 21, and may be a living room (also referred to as back room of the second floor, the widest room, or a screen/television room). Further, the fourth zone 24 may be a place of a deck [rack] shape called a drying place (veranda) to which the occupancy may go in and out through the second zone 22.

The third floor 30 includes at least the first zone 31 and the second zone 32 which are respectively partitioned by a predetermined area. Further, the number of zones is arbitrary, and one floor may be formed only by one zone. The first zone 31 is a staircase which is connected to the first zone 21 of the second floor 20, and includes a second staircase 25 which connects the second floor (the second floor 20) and the third floor (the third floor 30) to allow the occupant to move (also referred to as staircase of the second floor, upper staircase, or down staircase). The second zone 32 is a space in which at least a portion is connected to the first zone 31 in the same plane and which is placed at substantially the same height as the first zone 31, and may be a roof (also referred to as balcony, the outside of the third floor, or below the roof). Further, a space placed in the upper portion of the third zone 23 of the second floor 20 may be identified as the third zone 23 of the second floor 20 as an arcade (the third zone of the third floor 30) 33. In other words, as described below, a specification method using one of a plurality of expressions as a name used to specify a sunshade screen (and/or an open/close sensor of a high window as a detection target) may be used for the third zone 23 of the second floor 20 where a control target device is placed. For example, even in a case where the screen (and/or sunshade (screen) of the high window) of the arcade of the third zone 23 of the second floor 20 is called "screen of the third floor" in a state of being viewed from the upper portion (third floor) of the first zone (staircase) 31 of the third floor 30, or even in a case where the screen is called "sunshade (screen) of the high window" in a state of being viewed from the second floor, the same control target can be controlled.

The fourth floor 40 includes a roof 41 which covers the first zone (second staircase) 31 of the third floor 30 and the third zone 23 of the second floor 20 (the arcade (the third zone 33 of the third floor 30)). The roof 41 desirably supports a solar power generating device (solar power generating panel) 42 for example.

At the site 1, a detection mechanism is desirably provided in a portion (non-building space) except the portion, where the building (house) 100 is placed, in order to detect a target such as a cat or dog moving around the site 1. As the detection mechanism, a camera set and/or an illumination unit, or a camera (infrared camera) which can detect a target even at night using an infrared beam is desirably used.

In the building 100 illustrated in FIG. 1, the HGW 600 is, for example, placed at an arbitrary location of the second zone 12 to the fourth zone 14 of the first floor 10 and/or at an arbitrary location of the first zone 21 to the fourth zone 23 of the second floor 20. It is desirable that the HGW 600 can automatically move in the same floor which becomes substantially flush with each other or in the respective zones described below. There may be irregularities in the height direction about several centi-meters for example within substantially the same floor or in the respective zones. The HGW 600 may have a mechanism suitable to the movement in the height direction (for example, an endless driving mechanism (crawler) or an elevating mechanism) in order to move in the height direction within substantially the same floor or in the respective zones. The elevating mechanism may be configured separately from a propulsion (movement) mechanism for a plan movement. In addition, the HGW 600 may collect garbage and dust in the region where it moves. Further, in a case where the driving mechanism for movement is a roller shape, a brush may be integrally provided to move garbage and dust.

The HGW 600 can receive detection outputs from the respective (any one of) sensors which are placed in the respective zones of the building 100. In addition, the HGW 600 outputs (supplies) a control signal according to a predetermined protocol for each control target device, or control data according to a specific signal format. In addition, in a case a total two or more HGWs 600 are present in arbitrary two floors or the same floor among the first floor 10, the second floor 20, and the third floor 30, any one of the HGWs 600 serves as a master mechanism. In this case, the other HGWs 600 serve as slave mechanisms. Further, in a case where another communication unit is already present separately from the HGWs 600, all the HGWs 600 may serve as the slave mechanisms. On the other hand, in a case where the other communication unit can serve as the slave mechanism with respect to the HGWs 600, any one of the HGWs 600 serves as the master mechanism and the other communication unit may serve as the slave mechanism. The HGW 600 can make a communication to a smartphone and a television which are registered in the device management module through the network. In a case where a specific application/program is activated in the smartphone and the television, the smartphone and the television are set in a mutual communication mode with respect to the HGW 600.

### <Example of Creating Room Layout of Space of Embodiment>

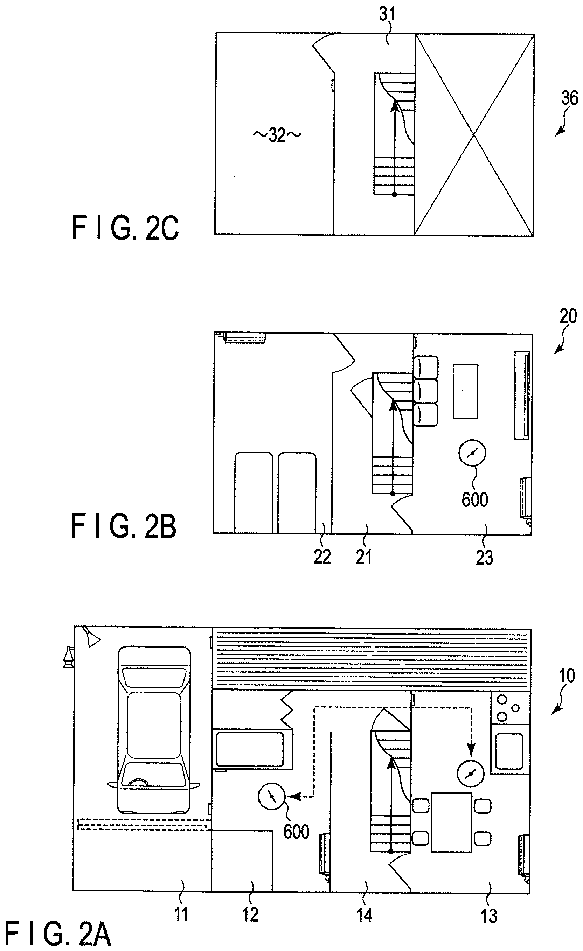

FIGS. 2A, 2B and 2C are a plan view illustrating the respective floors of the building 100 illustrated in FIG. 1. Further, in FIGS. 2A, 2B and 2C, the fourth floor (uppermost portion) of the building 100 illustrated in FIG. 1 is omitted.

FIG. 2A illustrates the first zone 11 to the fourth zone 14 of the first floor 10, FIG. 2B illustrates the first zone 21 to the third zone 23 of the second floor 20, and FIG. 2C illustrates the first zone 31 and the second zone 32 of the third floor 30.

Hereinafter, the description will be given about an exemplary procedure in a case where the user expands an illumination device in the first zone (storage/garage) 11 of the first floor (first floor) 10, which can be turned on/off at arbitrary timing from an arbitrary place (living room, zone, or site). Further, it is assumed that a plug socket (electrical outlet) is already provided in the vicinity of the position where the illumination device of the first zone 11 of the first floor 10 is expanded.

First, a mapping ("create for room layout") mode in the zone is activated.

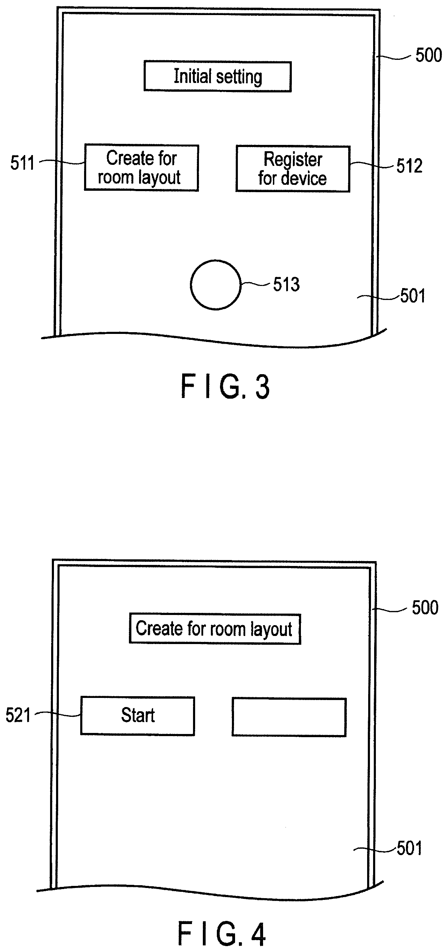

In an initial setting screen display illustrated in FIG. 3, when the user taps a [create for room layout] button (display) 511 shown in a display region 501 of the smartphone (input terminal device) 500, a "room layout creation" mode illustrating an exemplary display in FIG. 4 is activated. Further, the tapping may be called "touch" or "click", and any terminology may be used as long as the operation indicates that the user touches a button (display) shown in the screen with finger and detaches the finger from the button within a predetermined time, and thus the invention does not depend on terminologies. However, an operation of detaching the finger from the button exceeding the predetermined time after the user touches the button with finger is desirably distinguished. In addition, the display region 501 desirably displays, for example, a [register for device] button (display) 512 which is used to activate a "device registration" mode and a [return/cancel] button (display) 513 which is used to display a previous screen in addition to the [create for room layout] button (display) 511.

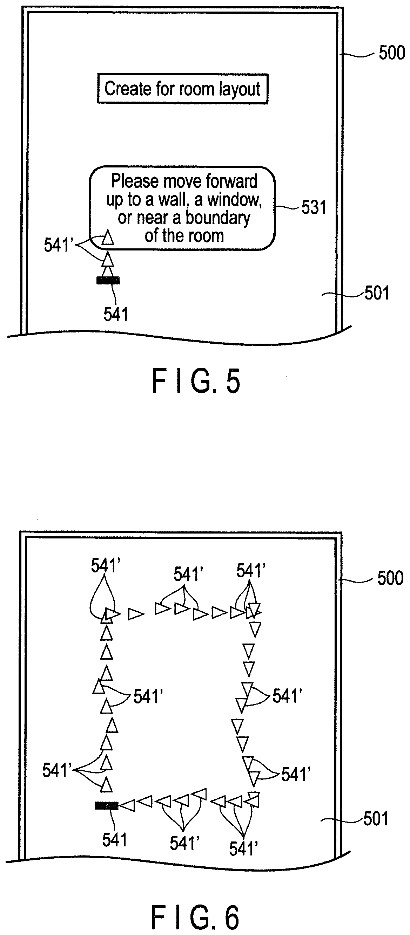

In the "room layout creation" mode illustrated in FIG. 4, when the user taps a [start] or [begin/start] button 521 shown in the display region 501, a GPS (Global Positioning System)/GLONASS (Global Navigation Satellite System) signal reception mode of the smartphone 500 is activated. In the "room layout creation" mode, the smartphone 500 specifies a position in a space where the user stays based on the received GPS/GLONASS signal, and stores the position as reference position information. The reference position information includes a latitude (Latitude), a longitude (Longitude), and an altitude (Altitude). In addition, as illustrated in FIG. 5, a current position 541 of the user corresponding to the reference position information is virtually displayed in an arbitrary location of the display region 501.

In the "room layout creation" mode, a virtual map (room layout) is created in a predetermined region in a memory (RAM) 502 based on a position (moving destination) of the user in a target space (in this case, the first zone 11) based on the sequentially (repeatedly)-received GPS/GLONASS signals, and based on the (previously specified) reference position information.

The smartphone 500 can make a communication with the HGW 600 described below. Therefore, the data such as the room layout created by the smartphone 500 is temporally stored in the memory in the smartphone 500, and the data to be stored is stored in the memory of the HGW 600 and the device management module through the network.

Further, when the mapping starts, there may be a specific space where the reception of the GPS/GLONASS signal is unstable (in trouble) such as some zones in a multiple dwelling house or an underground space. In such a case, the application of the smartphone 500 urges the user to move to a position where the GPS/GLONASS signal can be received on the screen, and can specify a reference position. In addition, in a case where the user moves to a space where the reception of the GPS/GLONASS signal becomes unstable after the GPS/GLONASS signal is received, the application can calculate a size of the space where the user moves using the output of a gyro sensor (direction sensor) of the smartphone 500, the output of an acceleration sensor, and a moving time, and virtually create the room layout.

In addition, in the middle of mapping, the smartphone 500 may move to a region where the reception of the GPS/GLONASS signal becomes unstable after the GPS/GLONASS signal is received. In such a case, the application of the smartphone 500 acquires the room layout information of a space such as a sport gym of which the room layout information is opened to the public established as an annex of the multiple dwelling house through the Internet, and can share the information, and thus the detection accuracy of the size (room) of the calculated space can be increased. In addition, for example, a message "Please move forward up to a wall or a window, or near a boundary of the room (zone)" is displayed to urge the user to move in a target space to an extent where the size of the target space can be appropriately detected, so that the detection accuracy of the room layout can be increased still more.

Specifically, as illustrated in FIG. 5, the smartphone 500 can display the current position 541 of the user and a message 531 in the display region 501. The message 531 is, for example, a message "Please move forward up to a wall, a window, or near a boundary of the room (zone)" (that is, a message to urge the user to move in a target space).

In FIG. 5, the current position 541 of the user is a position (hereinafter, referred to as reference position) where the user taps the [start] or [begin/start] button 521 in the "room layout creation" mode illustrated in FIG. 4.

The reference position is stored even in a case where the information of the room layout (virtual map) which is created in the memory 502 is updated.

The current position 541' of the user is created based on a difference between the GPS/GLONASS signal at the current position and the GPS/GLONASS signal at the reference position which are sequentially received. Then, the current position 541' is displayed in the display region 501 as a result obtained by updating the information of the room layout (virtual map) which is created in the memory 502. In addition, the current position 541' of the user is continuously displayed as a trace of the user in the display region 501. Since the user moves in the target space based on the message 531, there is no useless movement. Further, it is expected that the difference between the GPS/GLONASS signal at the current position and the GPS/GLONASS signal at the reference position can be detected with higher accuracy.

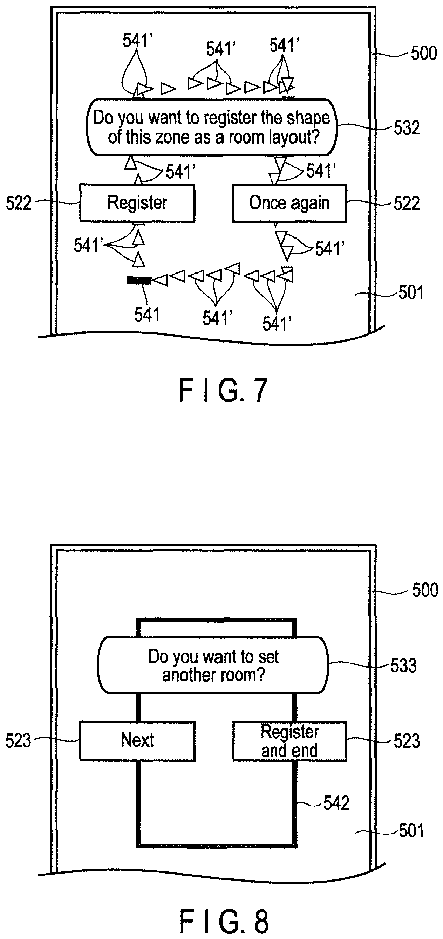

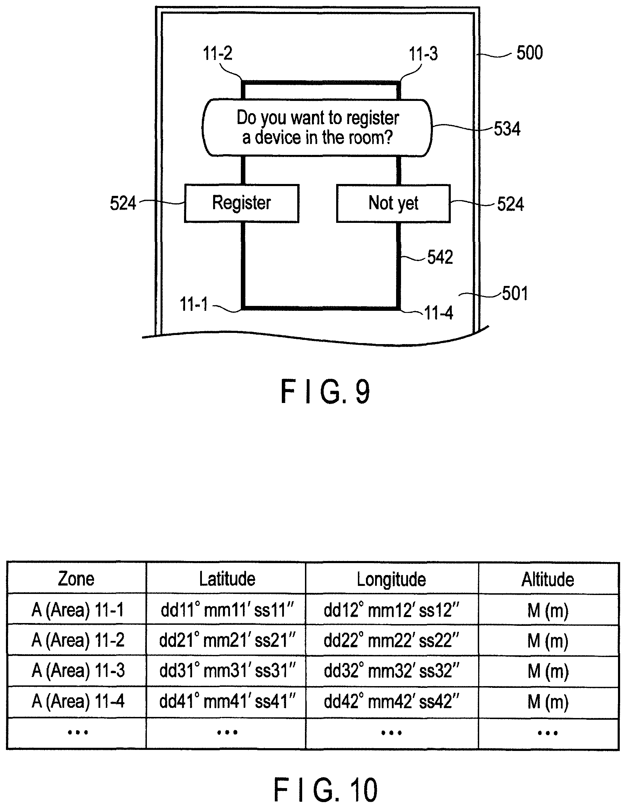

When the user moves consistently in the first zone 11, the user changes a moving direction at a wall, a window, or a boundary of the room. Therefore, the smartphone 500 detects the reference position or the vicinity thereof at a predetermined timing when the moving direction is changed several times in a state where the "room layout creation" mode is activated. At this time, the information of the room layout which is being created in the memory 502 becomes information which may approximately become a closed space (that is, a rectangular, triangular, or polygonal space). Therefore, the moving trace 541' of the user displayed in the display region 501 may be displayed like a plan view showing a zone as illustrated in FIG. 6. Further, the trace 541' displayed in the display region 501 is converted (or approximated) into a line to be illustrated as a rectangle 542 in FIG. 8 or 9 by the application/program used in the "create for room layout" mode.

In the "room layout creation" mode, a message 532 and a button 522 are displayed as illustrated in FIG. 7 at a time point when the moving trace 541' of the user (that is, the information of the room layout) is estimated as a shape of a room. The message 532 is, for example, "Do you want to register the shape of this zone as a room layout?". The button 522 is a button to receive an instruction from the user such as [register], [yes], [once again], or [cancel].

In a case where the instruction input (tap/touch of the screen) from the user is an affirmative input with respect to the completed room layout (register the trace as a room layout) such as [register] or [yes], the display region 501 changes the display as illustrated in FIG. 8. In other words, a message 533 to urge the user to take the next action such as "Do you want to set another room (zone)?", and a button display 523 to receive an instruction input from the user such as [next], [yes], or [register and end] are displayed.

Herein, in a case where the user's instruction input (tapping) is [next] or [yes], a message to urge the user to move to the next room (zone) is displayed in the display region 501. Then, the room layout in the memory 502 is sequentially updated based on a position of the user's destination and the reference position which are sequentially specified based on the GPS/GLONASS signal.

In a case where the instruction input (tapping) from the user is [register and end] in FIG. 8, a message 534 to urge the user to register a device such as "Do you want to register a device in the room (zone)?" and a button 524 such as [register], [yes], or [not yet] are displayed in the display region 501 as illustrated in FIG. 9. In a case where the instruction input (tapping) of the user is [not yet], "room layout" completed at this moment is stored in a predetermined area of the memory 502, and the "create for room layout" mode ends.

At this time, a latitude (Latitude), a longitude (Longitude), and an altitude (Altitude) are stored for every zone ([zone]) as information of the "room layout" as illustrated in FIG. 10. In a case where the shape of the zone is a rectangular shape 11 as illustrated in FIG. 9, the latitude and the longitude each are specified by dd° (degree), mm' (minute), and ss" (second) for each of the corners 11-1, 11-2, 11-3, and 11-4. Further, since the zone 11 illustrated in FIG. 9 is a rectangular shape and includes four corners, the positions of the latitude and the longitude of the zone illustrated in FIG. 10 are desirably displayed with suffixes to specify the respective corners and suffixes to indicate the latitude or the longitude.

The information "room layout" is typically assigned by a temporary zone name such as A(Area) 11-1, A(Area) 11-2, ..., in an order of creating the room layout. The temporary zone name is used later when the respective rooms are assigned with their own names.

### <Example of Registration Method of Device such as Sensor and Control Target Device>

As described above, examples of the device include the TV, the illumination device, the door open/close device, the window open/close device, the curtain (screen) open/close device, the air conditioner, the elevator, a PC (personal computer), the printer, a microwave oven (the electronic range), the toaster, the electromagnetic cooker, the vacuum cleaner, the washing machine, the fan, the rice cooker, the refrigerator, the telephone, the charging equipment, the plug socket, the switch, the sensor, the power generating device, the power meter, the heat recycling device, the electrical storage device, and the monitor camera.

Next, "register for device" will be described.

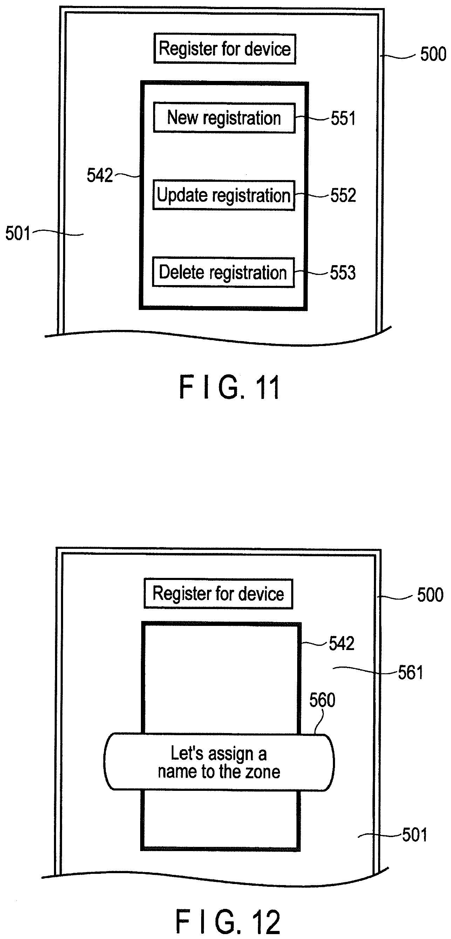

In a case where the [register for device] button (display) 512 is tapped in the initial setting screen illustrated in FIG. 3, or in a case where the "device registration" mode is selected in the "room layout creation" mode (the user taps (inputs) the button 524 of [register] or [yes] in the "create for room layout" mode), the "register for device" illustrated in FIG. 11 is activated for example.

In FIG. 11, as a method (type) of "register for device", button displays 551 ([new registration]), 552 ([update registration]), and 553 ([delete registration]) are displayed in the display region 501 to urge the user to select (input) any one of [new registration], [update registration], and [delete registration] for example.

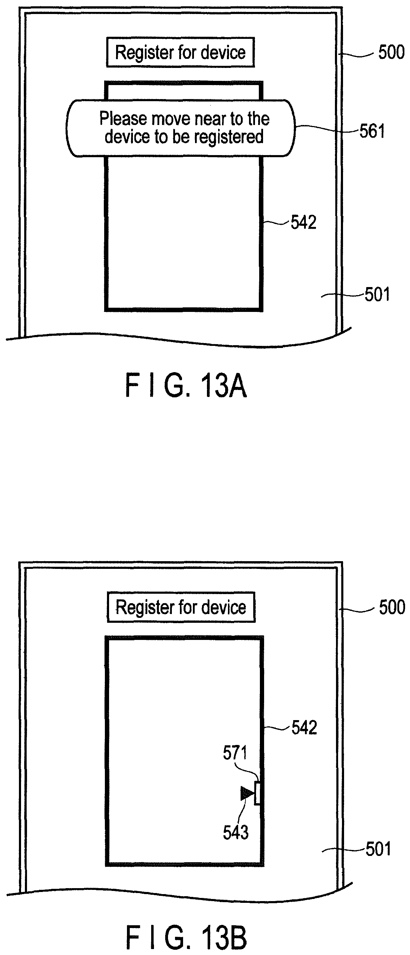

For example, when a new (or additional) device is instructed to be registered by the [new (additional) registration] button 551, the "register for device" mode is activated to guide the user using the display as illustrated in FIGS. 13A, 13B, 13C, 13D, 13E, 13F, 13G, 13H, 13I, 19A, 19B, 19C, 20A, 20B, and 20C. Further, the application/program used in the "register for device" mode can automatically determine a plurality of rules of radio communication, and automatically determine a communication mode.

Thus, the user can easily register a device without consciousness of "a rule of radio communication employed in a new or additional device (sensor and control target device)". In addition, when "a rule of radio communication employed in a new or additional device" is being detected, it is desirable to display, for example, "A communication type is being detected" in the display region 501 at the previous stage displaying a screen for every "register for device" mode.

Herein, a display 560 such as "Let's assign a name to the zone" is displayed to urge the user to register the name of the room (zone) as illustrated in FIG. 12 before "device registration", and the user is desirably urged to register "room name".

For example, when "room name" is registered, the information of "room layout" illustrated in FIG. 10 is used. For example, when the user enters an unnamed room for which the user tries to register the name, and taps the "new registration" button 551, the temporary zone name of the current room is displayed (for example, any one of A(Area) 11-1, A(Area) 11-2, ... illustrated in FIG. 10). Then, the user inputs a room name through voice or a character input screen, and taps a decision button, and then the input room name is displayed beside the temporary zone name (for example, A(Area) 11-1).

Further, the registration of the room name may start from the message "Let's register a room name" when the room is registered after the display illustrated in FIG. 8 or 9 is shown.

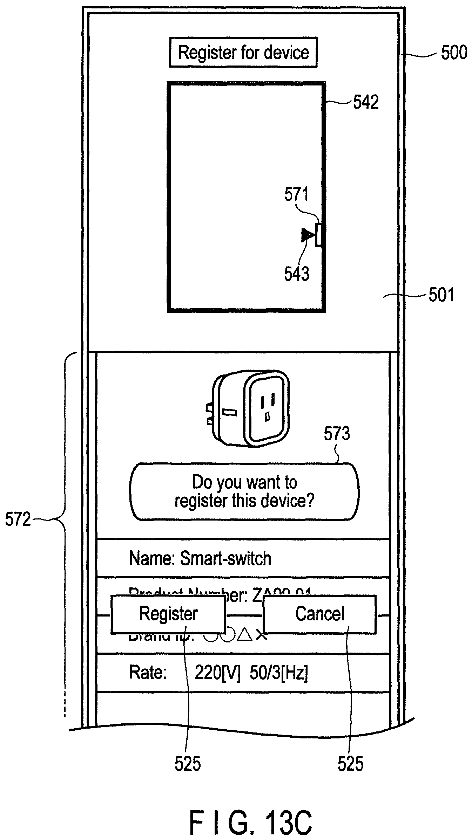

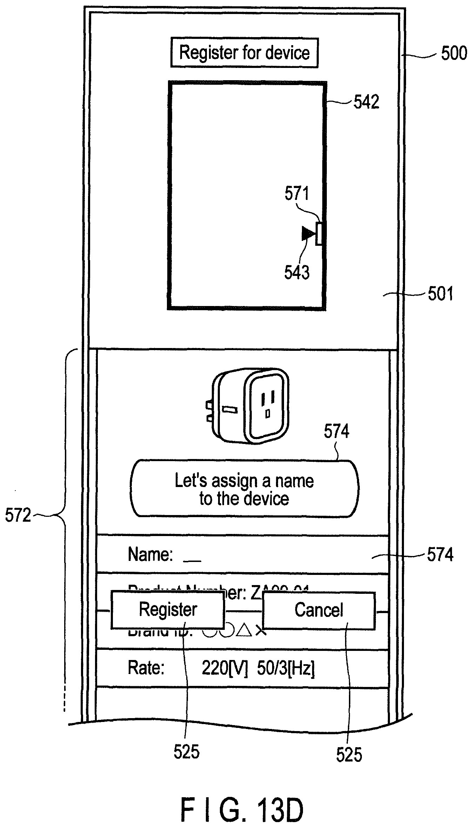

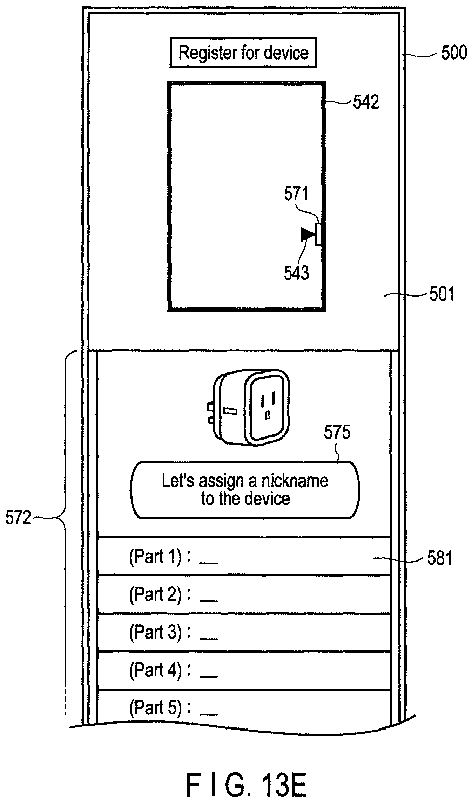

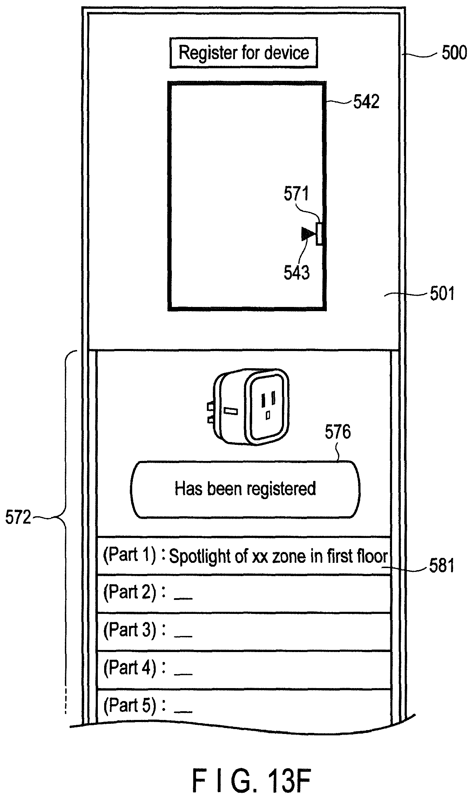

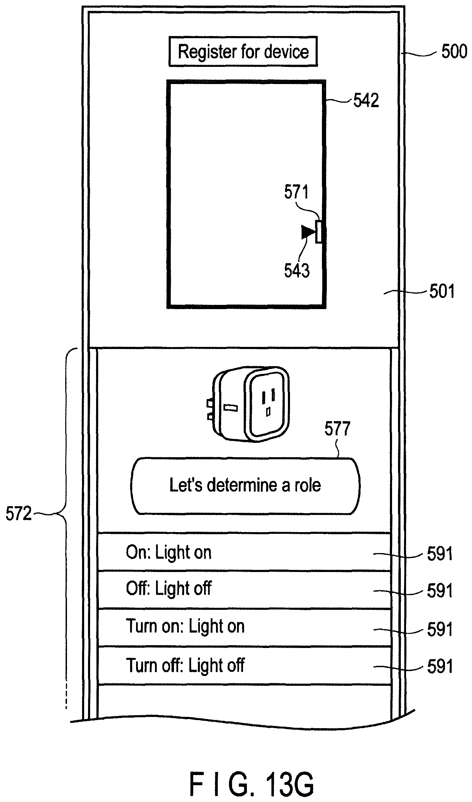

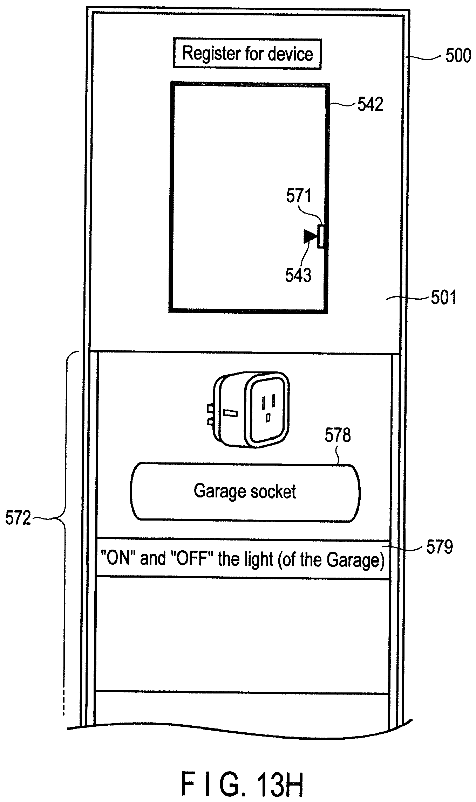

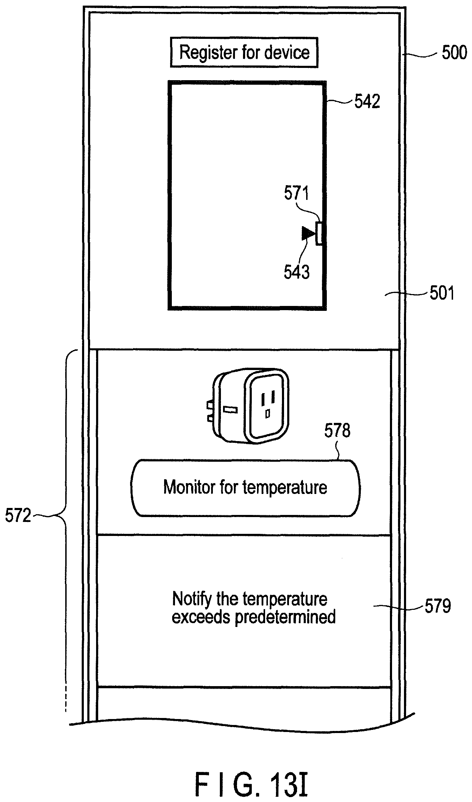

FIGS. 13A, 13B, 13C, 13D, 13E, 13F, 13G, 13H, and 13I illustrate an example of a registration procedure in the "register for device" mode in a case where a network standard of radio communication (a communication standard suitable to the device) used by the device to be registered complies with IEEE 802.15.4e for example and is [type A < Z-Wave>] using 900 MHz band.

FIG. 13A is an example of the display when the "device registration" mode is activated. FIG. 13A illustrates a state where the current position of the user is two-dimensionally displayed in the "room layout (plan)" registered in the "create for room layout" mode described using FIGS. 4 to 8. In addition, a message 561 such as "Please move near to the device to be registered" is displayed in the display region 501 to urge the user to specify the device to be registered. Further, the device activation is different depending on a type of the device or a state where the device is fixed, but is assumed to follow a standard specification such that an activation switch (an embedded reset button) prepared at a predetermined position of the device is turned on.

For example, the standard specification may be a push button method in which, when a time is set in a remote controller or a watch, the reset button is pushed using a tip of a pen/ball pen to be turned on (input mode), and pushed one more time to be turned off (non-input mode).

When the user moves near to the device (for example, a device 571) to be registered and recognizes the device 571, and activates the device 571, the display illustrated in FIG. 13B is obtained. In other words, the "room layout (plan)" 542 is updated to a state where the position 543 of the user and the position of the device 571 are displayed.

At this time, as illustrated in FIG. 13C, an image (Image) showing a rough shape of the device 571 and/or a product name for each standard function such as a switch (On/off switch), a sensor (Motion sensor), a sensor (Open/close sensor), and a socket (Electrical outlet/Receptacle outlet), a product specification, and/or an item name (model number) prepared by a provider are displayed in a list 572 in the display region 501.

The list 572 is acquired as follows for example. In other words, when the device 571 is activated, the HGW 600 recognizes the device 571, and transmits, for example, the information of a brand ID of the device 571 to a cloud server (1100) through the network. Then, since the data of the list 572 is transmitted from the cloud server to the smartphone 500, the HGW 600 transmits the received data of the list 572 to the smartphone 500. Thus, the smartphone 500 can display the list 572.

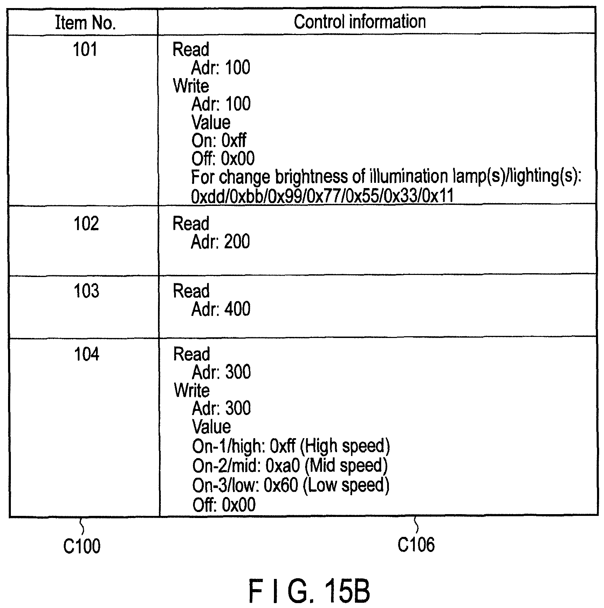

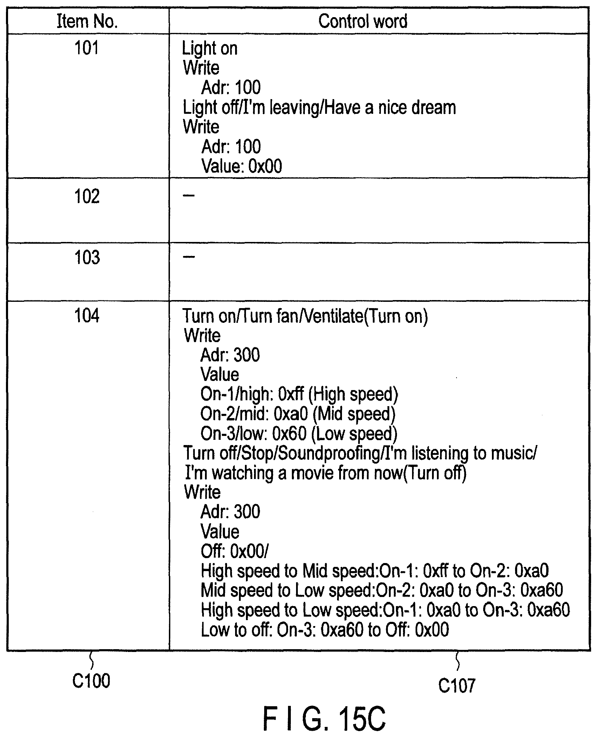

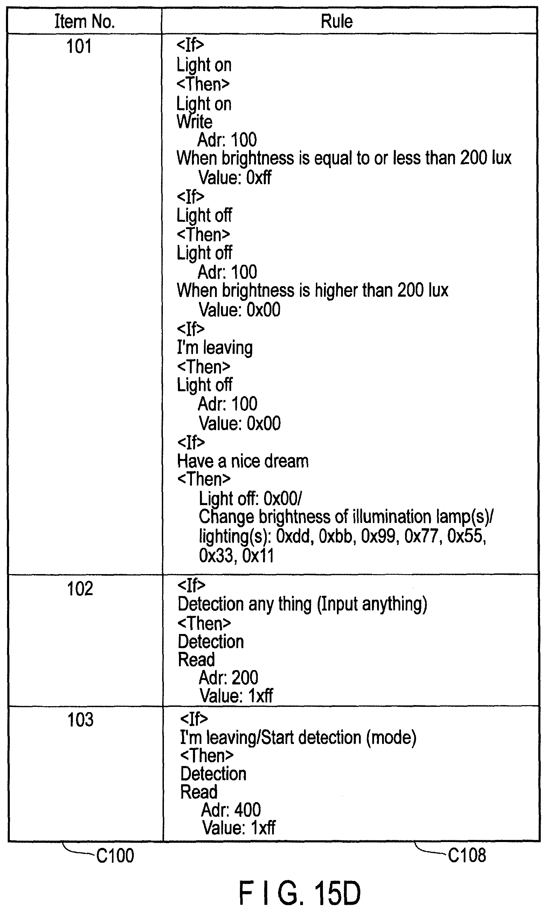

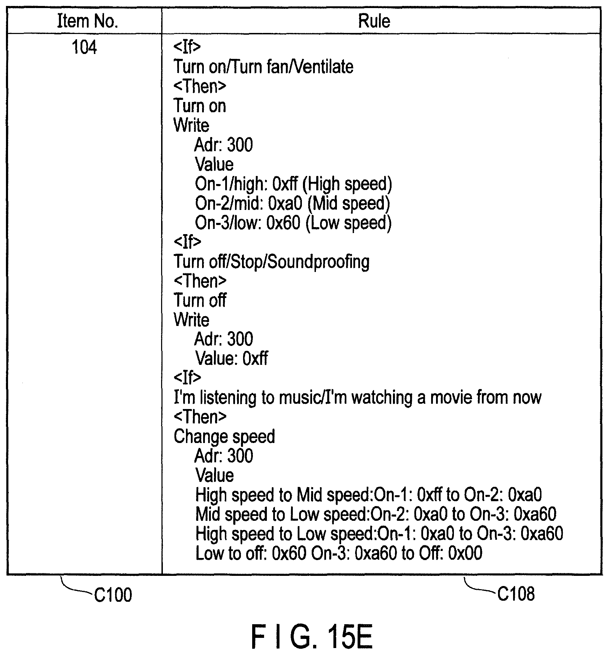

In the cloud server, a feature table is stored as illustrated in FIGS. 15A, 15B, 15C, 15D and 15E below. The feature table may be downloaded to the HGW 600 and stored in a memory in the HGW 600. However, in this case, since the feature table may be updated, the HGW 600 may acquire the feature table from the cloud server (1100) regularly or whenever the updating of the table is informed.

In the feature table illustrated in FIGS. 15A, 15B, 15C, 15D and 15E, for example, a column C102 contains information of brand IDs of the devices, a column C103 contains information of product IDs of the devices, a column C104 contains information of product names of the devices, a column C105 contains information of functions of the devices, and a column C110 contains images (Image data) of the devices, respectively. These pieces of information are established by being uploaded to the cloud server by each maker.

Further, in FIG. 13C, the rules related to displaying the display positions, a display order, overlapping, and transparency/non-transparency at the time of overlapping of the list 572, the "room layout (plan)" display 542, a message 573, and/or a button 525 are arbitrary. In addition, a display size is set in accordance with the size of the display region 501, a display amount per one screen display is controlled, and all the screen displays are desirably displayed by scrolling the screen. Further, the setting of the smartphone 500 may be employed regardless of the display rule of the application/program used in the "register for device" mode.

By the way, since the device of "type A" is not automatically activated in the "register for device" mode, the user necessarily activates the device to register the respective devices. This configuration makes it easy to specify the respective devices since the user moves near to the target device to activate the device. The device of "type A" has a feature that only one activated device is displayed in the "room layout (plan)" display 542.

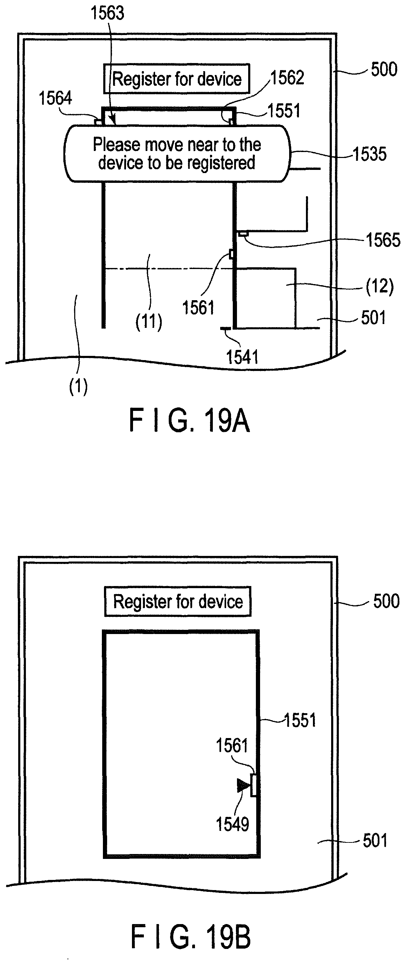

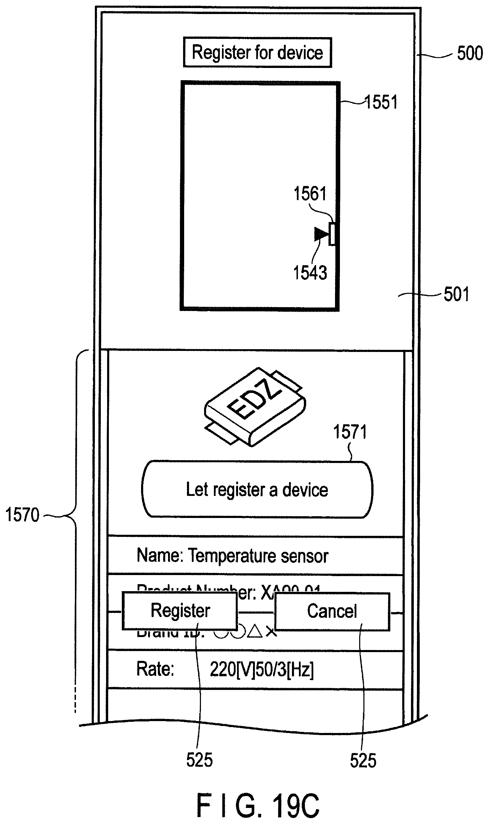

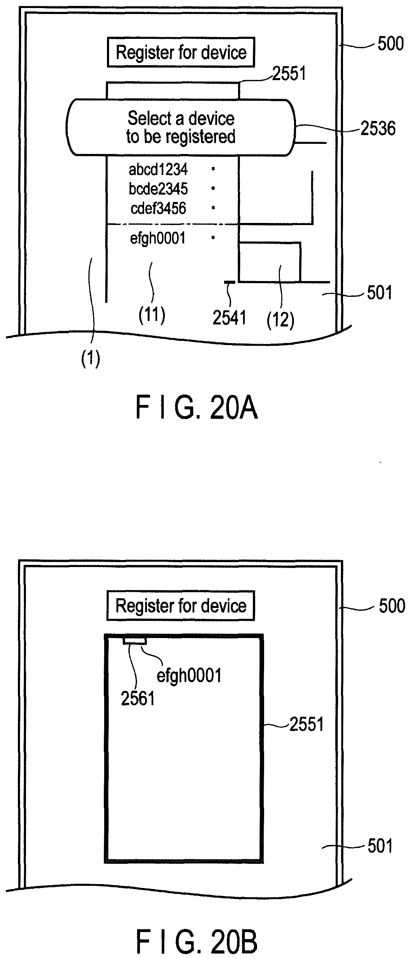

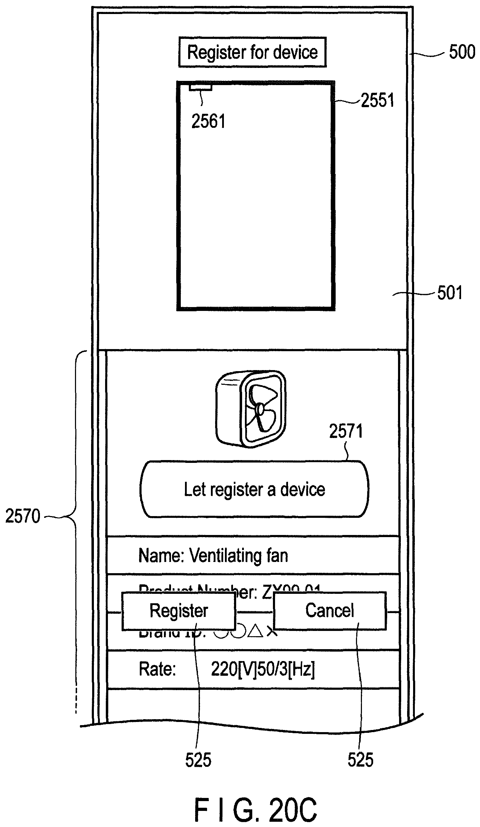

Further, unlike the device of "type A", there is other types ("type B" and "type C") in which a plurality of devices are activated at the same time. However, when these types of device are used, there is a need to provide another procedure to specify the device to be registered. Such a device will be described below using FIGS. 19A, 19B, and 19C, and FIGS. 20A, 20B, and 20C.

Subsequently, for example, a message 573 such as "Do you want to register this device?" and a button 525 assigned to an instruction input such as [register], [yes], [restart], or [cancel] are displayed in the display region 501.

In the screen display of FIG. 13C, in a case where the user performs an instruction input (tap) of [register] or [yes], the screen display is switched to the screen display illustrated in FIG. 13D. In other words, for example, a message 574 such as "Let's assign a name to the device (Please set a name to the device)", a name input region 572A, and the button 525 assigned to the instruction input such as [register], [yes], [once again], or [cancel] are displayed in the display region 501.

Further, in FIG. 13D, the rules (actual display formats) related to displaying the display positions, an display order, overlapping, transparency/non-transparency at the time of overlapping of the "room layout" display 542, the message 574, the input region 575, and/or the button 525 are arbitrary. In addition, each display size is set in accordance with the size of the display region 501, and a display amount per one screen display is controlled, and all the screen displays are desirably displayed by scrolling the screen. However, each display size can be set to display all the display contents in the display region 501 by reducing the screen.

In addition, as illustrated in FIG. 13E, a message 575 such as "Let's assign a nickname to the device" is displayed, and the nickname may be input to an input region 581.

However, as illustrated in FIG. 13F, in a case where the name of the device input by the user is already present, a message 576 to urge the user to avoid registering the duplicate name such as "The device having the same name has been registered. Input another name" may be displayed, and the name may be displayed in the input region 581.

As described above, in FIG. 13D, in a case where the instruction input (tap) from the user is [register] or [yes], the zone name (Zone), the registered name (Device), the latitude (Latitude), the longitude (Longitude), and the altitude (Altitude) are registered as the location information of the device in the "room layout" as illustrated in the example in FIG. 10 in a predetermined region in the memory 502.

Then, when the user completes the registration of the name of the device through the screen display illustrated in FIG. 13D, the message 575 to urge the user's operation such as "Nicknames can be given up to N (N is an integer)", and at least one input region 581, ... can be displayed in the display region 501 as illustrated in FIG. 13E. The input region 581, ... may be displayed such that the next input region is displayed when one nickname is completely input, or N input regions may be displayed as illustrated in FIG. 13E. The displaying of the input region 581, ... can be skipped according to the user's operation. For example, an addition (or editing) can be made at a predetermined timing using a "name editing" mode. However, in a case where the device nickname input by the user is already present in the input region 581, ..., the message 576 to urge the user to avoid registering the duplicate name such as "The device having the same name is already registered. Input another nickname" is desirably displayed as illustrated in FIG. 13F. At this time, it is desirable that a unique feature be displayed as illustrated in FIG. 13H with reference to a unique product name of the device in the column C103 of the feature table illustrated in FIG. 15A and the product name (produce specification) listed in the column C104.

Further, the registered (device) name of the above device is set to the "garage spot light" in order to describe the nickname. In addition, the nickname may be replaced (rephrased) in various names such as "garage light", "garage spot", "car barn spot", "car barn lamp", "outside lamp of first floor" (an example of expression not necessarily to specify "garage"), "garage, light" (punctuation is inserted), and "spot light, garage" (punctuation is inserted). The name and nickname of the registered device are registered in a column C107 (control word column) of FIGS. 15A and 15C in association with the control information listed a column C106. Thus, the device that is completely registered can be determined as the same device even in a case where a plurality of names including the calling name (device name) assigned as the given name and the nickname are used.

However, in the following case, the HGW 600 can transmit a feedback (question) for specifying the device to the terminal device carried by the user. Further, in a case where the HGW 600 includes a voice output mechanism, the feedback may be directly output in voice from the voice output mechanism. There is a condition (the reason of the feedback) that the HGW 600 transmits the feedback to the user. For example, there may be a case where there is another device having a similar name, a case where there is a device having the same name in a different zone, or a case where the instruction (utterance/voice) of the user is not clear and thus the device and/or the zone cannot be specified.

In a case where the user inputs at least one nickname in the input region 581, or in a case where the user skips the input of the nickname, a message 577 to urge the user's operation such as "Let's determine a role (operation/function is defined)" and at least one input region 591 are displayed in the display region 501 as illustrated in FIG. 13G.

The device registered as "spot light of garage" in this embodiment is a device which can be turned on/off by notifying that there is an instruction (input) by voice through the HGW 600 on the illumination device connected through the already-installed plug socket. In other words, the above device (in this example, the device connected to the spot light of the garage) controls the connected illumination device to be turned on (lighted on) by notifying through the HGW 600 that "turn on spot light of garage" or "light on spot light of garage" is instructed by voice. In addition, the subject device controls the connected illumination device to be turned off (lighted off) by notifying through the HGW 600 that there is an instruction such as "turn off spot light of garage" or "light off spot light of garage" by voice.

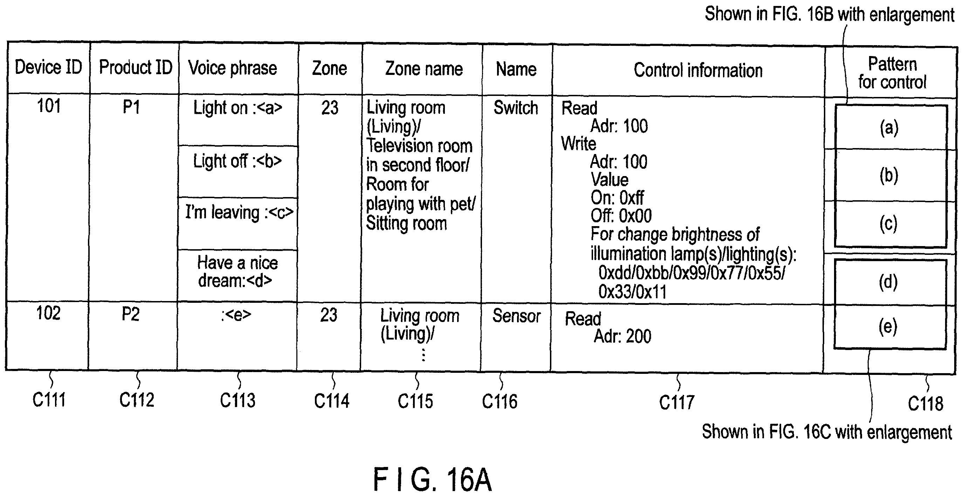

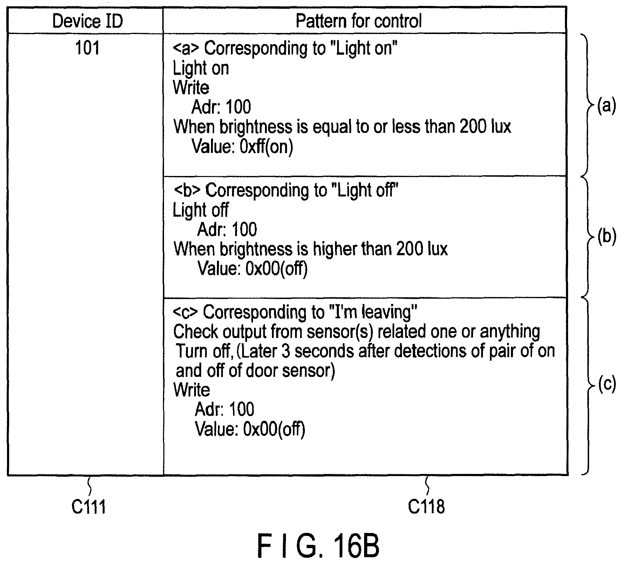

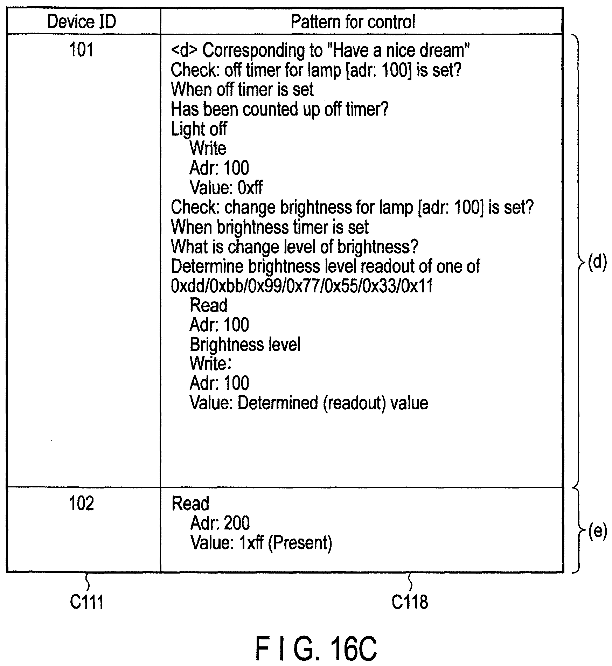

In other words, as a role of the device registered as "spot light of garage" is to "turn on" and "turn off" the illumination device. In addition, a role of the device (light) registered as "illumination of living" is a lighting control by a control unit (controller) embedded in the light (device). From such a background, a role is specified (determined) from a column C113 (control word) and a column C117 (control information) of an intention interpretation (data table) illustrated in FIGS. 16A, 16B, and 16C with respect to the information (required operation of the device) acquired from the device name specified by a user's voice and any one of "turn on", "light on", "turn off", or "light off". A control pattern is read out of a column C118 of FIGS. 16B and 16C based on the specified (determined) role, and notified to the control target device through the HGW 600.

Further, even in a case where the direction communication cannot be made between the own device and the HGW 600, the device of "type A" can make hopping (relaying) a signal from the HGW 600 to the own device and a signal from the own device to the HGW 600 using another device of "type A" as a relay device. Thus, it is possible to suppress the communication capability of each device of "type A", and a network having less power consumption can be established.

Further, for example, a direct instruction may be not contained in the control word such as "light on" and "light off". For example, in the control word of turning on/off the light, there are similar control word (expression) such as "Good night", "Have a nice dream", and "I'm leaving". However, any control word is associated to the voice control to be interpreted as "turning off light" ("light off"). In addition, even the control word such as "Good night" and "Have a nice dream" include various replaceable expressions such as "Sleep well" or "Sweet dreams". Therefore, while described below, even in a case where an actual operation pattern of the device illustrated in FIG. 16B is specified based on an association between the control word and a rule illustrated in FIGS. 15C, 15D, and 15E, various control words and the operation pattern of the device are associated to specify an appropriate operation pattern from (expression of) various control words.

Similarly, for example, the control of voice is associated such that the control word for a fan (ventilation fan) such as "Soundproofing (sound is generated indoors)", "I'm listening to music (calmly)", and "I'm watching a movie from now (calmly)" can turn off or release the fan (ventilation fan). However, the fan can be controlled (changed) in speed as listed in the column C107 of FIG. 15C. Therefore, in a case where "I'm listening to music (calmly)" or "I'm watching a movie from now (calmly)" is instructed, the stage (notch) of the operation state (speed) may be changed one by one (from a high speed to an middle speed, and from the middle speed to a low speed). In addition, in the case of "Soundproofing (sound is generated indoors)", the fan is turned off. However, it is also possible to prepare an operation mode such that the face is operated (turned on) during a predetermined period after a certain time elapses since the fan is turned off in order to ventilate the room.

By the way, the role (that is, operation/function) of the device may be uniquely determined based on the production specification of the device stored in the feature table illustrated in FIGS. 15A, 15B, 15C, 15D and 15E. As described above, in a case where the product specification of the device is, for example, a switch type which only can turn on/off the power source, the name of the device which can be acquired based on the produce specification (the content of the feature table) of the device may be displayed in a region 578 which has been used as an input region so far as illustrated in FIG. 13H. In this case, for example, a message 579 such as "oo (the input name) is ΔΔ (the product name of a standard function) of ◊◊ (the name of the room) (herein, "the device is a spot light of the garage" is turned on/off)" may be displayed in a remaining portion (a region where no other display is shown) of the display region 501. Further, as illustrated in FIG. 15D, in a case where the multilevel control pattern is prepared in correspondence with the control word such as "Good night" or "Have a nice dream" with respect to the light (illumination device), a feedback message such as "Brightness can be set" or "Do you want to lighten up (down) little more?" may be displayed. Further, in a case where the HGW 600 (or the illumination device) is prepared with a voice output mechanism (speaker) and a voice reproducing (synthesized voice output) function, the above feedback message can let the user to hear by voice (realized by the voice reproducing function).

Further, in a case where the target device is, for example, a sensor (temperature sensor) and has a role (operation/function) to detect a temperature of the room, the target device typically outputs temperature data of a temperature at a time point when a polling is received (or a transmission instruction from the user). However, in a case where a change in a specific pattern (for example, a humidity exceeds 77% and a temperature exceeds 31°C) is detected, it is possible to automatically notify that a temperature change occurs. For example, as illustrated in FIG. 13I, the function (role) of the device may be displayed in the region 578 which has been used as the input region so far, and the message 579 such as "Notify the temperature exceeds predetermined" may be displayed in the remaining portion (an empty region reserved for displaying other contents) of the display region 501.

FIG. 10 illustrates an example of position information (data table) of zones (Zone). The data table illustrated in FIG. 10 is, for example, located in an external server, and stores the latitude (Latitude), the longitude (Longitude), and the altitude (Altitude) for every zone (Zone). The respective data of the latitude (Latitude), the longitude (Longitude), and the altitude (Altitude) stored in the data table illustrated in FIG. 10 can be acquired by the user's movement as already described using FIGS. 3 to 7, and may be acquired by the automatic movement of the HGW 600. In this case, the movement trace of the HGW 600 is stored in the zone/position information (data table) at a predetermined timing. Further, in a case where the position information is present every zone (Zone) acquired by the automatic movement of the HGW 600, a mapping ("room layout creation") mode in the zone described using FIGS. 3 and 8 may be omitted of course.

FIG. 14 illustrates an example of the (position) information (data table) in the zone. The data table of the position information in the zone illustrated in FIG. 14 is, for example, placed in the recording medium 1110 of the server 1100, and stores the latitude (Latitude), the longitude (Longitude), and the altitude (Altitude) for the device placed in each of the arbitrary zones (Zone) A, B, and so on. Further, the temporary zone name in a corresponding relation with the temporary zone name assigned in FIG. 10 (that is, corresponding to the zone (Zone) where the user is currently placed) is displayed in a predetermined order in each of the zones (Zone) A, B, C, and so on. In other words, in FIG. 14, for example, the zone (Zone) 11 is listed corresponding to the zone (Zone) A(Area) 11-1, the zone (Zone) 12 to the zone (Zone) A(Area) 11-4, the zone (Zone) 13 to the zone (Zone) A(Area) 11-3, and the zone (Zone) 14 to the zone (Zone) A(Area) 11-2.

When the user registers the device to be registered, the respective data of the latitude (Latitude), the longitude (Longitude), and the altitude (Altitude) stored in the data table illustrated in FIG. 14 is stored by associating the position information and the device at the time when the device is registered as described using FIGS. 9, 11, 13A, 13B, and 13C.

The position information (latitude, longitude, and altitude) stored in the data table illustrated in FIG. 14 is accumulated for every device whenever the user registers the device. In addition, the position information illustrated in FIG. 14 can also be used to analogize (estimate) zones in a case where the next device is registered, and to display the nearest zone among the analogized (estimated) zones in the display region 501 of the input terminal device (smartphone) 500 as default through GUI-1.

FIGS. 15A, 15B, 15C, 15D and 15E illustrate an example of feature information (data table) of the device (sensor). The data table of the feature information of the device (sensor) illustrated in FIGS. 15A, 15B, 15C, 15D and 15E is, for example, placed in the recording medium 1110 of the server 1100, and contains the columns C100 to C110.

In FIG. 15A, the column C100 illustrates item Numbers (device IDs (Item No.)) for identifying arbitrary number of devices used in the embodiment. The column C101 contains information related to a standard of radio communication to which an arbitrary device corresponds. The column C102 contains information of the brand IDs of the devices for example. The column C103 contains unique product names of the devices for example. The column C104 contains information (that is, the product name (product specification)) which the function of the device can be uniquely specified for example. Further, the product name listed in the column C104 desirably shows a unique function of the device such as "switch", "sensor", and "fan" for example. The column C105 contains the function of the device and information related to the control pattern. Further, the function (name) may directly indicate the unique function of the device illustrated in the column C105 and the operation thereof similarly to the product name listed in the column C104. Therefore, during the "device registration" described in FIGS. 13D, 13E, 13F, and 13G, the function (name) is desirably displayed as default in the display region 501 of the smartphone 500 by GUI-1. The column C106 contains information related to the control method for realizing the function of the device. Further, the information listed in the column C106 corresponds to the function of the device listed in the column C105 in a one-to-one manner.

The column C107 contains a relation with respect to the operation of each device in a case where the name and the nickname of the device are instructed by voice. In other words, the operation can be specified in a case where the registered device is instructed to be variously rephrased based on the information which is registered in the column C107 and related to replacements (rephrases) listed in the column C107. For example, the control word such as "Good night", "Have a nice dream", and "I'm leaving" is recognized as the control word for specifying "light off" as described above.

The column C108 contains a rule of the operation with respect to the determination on the operation and the determination result of the various devices listed in the column C107. The rule listed in the column C108 is, for example, configured by a syntax "<IF (if ... / when ...)> - <THEN (do ---)>", and realizes the operation (<THEN>) of the device which is associated in advance based on the output (<IF>) from a device and, for example, "Turn on Dad Bedroom light (light of bed room is lighted on)", "Turn on Garage light (light of garage is lighted on/light on, garage)", "Turn off pass way light (light of passage is lighted on)", or "Set/Warm up temperature bath room for 70F (set (warm) up temperature of bath room to (about) 21°C before bathing)" are representative. In this case, the associated device may be the own device, or may be a device following the predetermined correspondence relation. The HGW 600 outputs an instruction to make the air conditioner of the room operate at a predetermined temperature (from a cooling operation or a warming operation) in a case where the temperature detected by a temperature sensor (device) of the room is a temperature to operate the air conditioner of the room. For example, in a case where a notification of "Detected temperature of the room ABC over DE°C (the temperature of room ABC exceeds DE°C)" (<IF>) is received, the HGW 600 desirably outputs "Set temperature of the ABC room for FG°C with the air conditioner (turn on the air conditioner to make (set) the temperature of room ABC to be FG°C)" (<THEN>).

Further, the rule configured by the syntax "<IF (if ... / when ...)> - <THEN (do ---)>" can set a plurality of <THEN> with respect to one <IF> as described above.

For example, in a case where the control word such as "light on" is issued with respect to the light of the living room as listed in the column C108 of FIGS. 15A, 15B, 15C, 15D and 15E, the light may be turned on when the brightness of the zone (room) is darker than a certain luminance for example. Naturally, in a case where the control word such as "light on" is issued, the light may be necessarily turned on. In addition, in a case where the light is adjustable in brightness, the brightness at the time of lighting-on is fed back to the user. Alternatively, the brightness may be set by the user at the time of lighting-on.

Further, in a case where the light of the living room is turned off in accordance with the control word such as "I'm leaving", the light may be turned off after a certain time (for example, 1 or N (N is a positive integer) minutes) elapses in consideration of a moving time taken for the user to go out of the room (zone). On the other hand, in a case where the light of the living room is turned off in accordance with the control word such as "Good night" and "Have a nice dream", there is a need to take a case where the user remains (is left in the zone) into consideration. In this case, for example, it is desirable that the light be turned off at a time when it is detected that the user is left out of the zone based on a sensor output around (the light is not turned off during a period when the user stays in the zone). Alternatively, the brightness of the light may be controlled to be reduced at every certain time (for example, 15 seconds or about 1 minute) elapses in a stepped manner.

For example, it is necessary to take the instruction not clearly showing turning-on/off such as "Soundproofing" into consideration for the control word with respect to the fan (ventilation fan) as illustrated in FIGS. 15C, 15D, and 15E. In this case, since it is expected that a large sound is made in the zone for example, it is determined that the fan is turned off. Further, the control word such as "I'm listening to music" and "I'm watching a movie from now" may be switched to a low-speed operation in which the speed of the fan is decreased by one step or two steps. On the other hand, in the case of the control word such as "Ventilate", the fan may be turned on when the fan is in an OFF state, or may be switched to a high-speed operation in which the speed of the fan is increased by one step or two steps when the fan is already in an ON state. For example, in a case where the temperature sensor placed in the same zone detects that the temperature in the zone exceeds the predetermined temperature in a state where the fan is turned off according to the control word such as "Soundproofing", the fan is desirably operated at a low speed.

The column C109 contains information related to an interface which controls the operation of the target device based on the contents listed in the columns C106 to C108 (for example, an interface used to control an actual control target such as turning-on (or turning-off) of a switch or changing of (preset) temperature (changing of tapping voltage of the controller)).

The column C110 contains image data of the target device which is desirable to be visually displayed to the user in the "device registration" described using FIGS. 13D, 13E, 13F, and 13G.

FIGS. 16A, 16B, and 16C illustrate an example of the intention interpretation (data table). The intention interpretation data table illustrated in FIGS. 16A, 16B, and 16C is, for example, placed in an external server, and contains the columns C111 to C118.

The column C111 contains the device ID/Item no. of each unique device in the home network 1000. The device ID/Item no. shows a correspondence relation with an arbitrary device contained in the sensor feature information (data table) illustrated in FIG. 15A. The device ID is linked to Item no. listed in the column C100 in FIG. 15A, and used in the management of each device by the HGW 600 in the home network 1000 described below using FIGS. 16A, 16B, and 16C.

The column C112 contains the product ID in the feature information of the device contained in the column C103 in FIG. 15A. Thus, a correspondence between the device ID and the registered device is secured.

The column C113 contains information related to various replacements (rephrases) for recognizing the control word (the respective phrases forming the control word) illustrated in the column C107 containing the feature information of the sensor in FIGS. 15A and 15C. In other words, the column C117 contains information linked to a relation between the information input by the user (for example, by voice), the information related to the control method to realize the function of the device contained in the column C106 in the feature information illustrated in FIGS. 15A and 15C, and the control word or the phrase. Thus, in a case where the control word of various words (expressions) is issued to the device assigned with the name listed in the column C116, the corresponding device is specified, and the control information listed in the column C117 (which operation is intended) can be specified.

The column C114 contains information of each zone in FIG. 14. Naturally, the information of each zone listed in the column C114 corresponds to the space illustrated in FIG. 1 (that is, the zone of the building 100).

The column C115 contains a zone name corresponding to the information of each zone listed in the column C114. The zone name can be arbitrarily set by the user and, for example, the name of the room set in FIG. 12 is contained. Further, the zone name is also positioned as a nickname corresponding to an arbitrary room (zone). For example, in FIG. 1, even in a case where the zone 23 corresponding to the living room is called various replacements (rephrases) such as "living room (sitting room)", "common room", "television room in second floor", and "room for playing with pet", it is possible to recognize the same zone (room). Similarly, the zone 11 corresponding to a multipurpose space (parking space) can desirably correspond to various rephrases such as "car barn", "garage", and "the outside of first floor".

The column C116 contains the unique product name and/or the unique product name (product specification) of the device.

The column C117 contains the control information (which is equal to that in FIGS. 15A and 15B) associated to the control word (the respective phrases forming the control word) contained in the column C107 in FIG. 15A.

The column C118 contains information related to the actual control method (control pattern) for realizing the function of the device contained in the column C106 in FIG. 15A. In other words, the column C118 indicates the control pattern for actually controlling the target device based on the column C113 (control word) of the intention interpretation (data table) illustrated in FIGS. 16A, 16B, and 16C and the role specified (determined) from the column C117 (the control information). Further, the control pattern indicates the operation of the device which is identified by the above control word and, for example, indicates that the turning-off timing (pattern) is different in a case where the illumination (light) is turned off based on the respective control words of "light off", "I'm leaving", "Good night", and "Have a nice dream".

For example, in a case where the control word is "light off", the light (illumination) is desirably turned off right away because a control amount is 0x00. With this regard, in a case where the control word is "I'm leaving", the light is desirably turned off in a case where a door sensor detects that a door is opened once before and then closed even though the control amount is 0x00. In addition, in a case where the control word is "Good night" or "Have a nice dream", it is desirable to check whether an off-timer is set, or whether brightness adjustment (not turning off) is instructed. Further, in a case where there is an instruction to set the off-timer or adjust the brightness, the procedure moves to the control of course. In addition, in a case where the control word such as "light off" is issued when an air conditioner adjusts the temperature of the zone and a television is operating, it is desirable that a permission about which one is the target device be obtained from the (uttered) user who has instructed with the control word. In this case, one device is specified and it is desirable to ask the user using an expression to get consent to the subsequent control operation such as "You means turn off television". On the contrary, since it may be considered that outputting an acknowledge by voice such as "Air conditioner is turned off" with respect to the control word to specify the target device such as "Turn off air conditioner" is troublesome, the HGW 600 may output the control signal to the target signal without voice (without a voice output). In this case, for example, it is desirable to make GUI-1 of the portable terminal device 500 carried by the user display a reply implying acknowledge such as "Air conditioner is turned off" (sending a reply to the portable terminal device 500). Further, it is desirable that the outputting of the control signal without voice (without a voice output) can be selected by the user through a setting screen which is displayed by GUI-1 for example.

In a case where the control word is "I'm leaving", it is determined that the occupant (user) goes out of the zone (building) when the door sensor detects that the door is once opened and then closed, and after 3 seconds for example, the HGW 600 outputs the control signal to turn off the light. Further, the user's leaving-out to the outside of the building may be detected, for example, using the position information of the portable terminal device (smartphone) 500 carried by the user. In this case, the HGW 600 outputs the control signal to turn off the light (switch) at a time point when it is detected that the position information indicates the outside of the building. Naturally, the output (detection of open/close) of the door sensor and the use of the position information of the smartphone may be used together to detect that the user goes out of the building. Furthermore, for example, the HGW 600 may output the control signal to turn off the light (switch) by detecting the user's movement in combination of various outputs from other sensors detecting, for example, that a person enters the garage and a car departs from the garage.

In addition, the HGW 600 checks whether there is remaining a member of a family including the user in the building using the outputs of other sensors in a case where the door sensor detects open/close. In a case where there is remaining a person (including the user) in the building, the HGW 600 desirably nullifies the turning-off the light (switch). Further, the checking of whether there is remaining a person in the building may be realized even using the position information of the smartphone carried by each person including the user.

In addition, in a case where a pet stays in the building, the HGW 600 is to control the respective devices according to information which is set in advance by the user. In this case, the HGW 600 outputs various control signals to the plurality of devices which may be cooperated by an instruction of the user such as to keep the operation state of the air condition while the light (switch) is turned off, and to turn on a motion sensor in a case where the motion sensor is turned off. However, it is desirable to get consent (permission) by feeding back (transmitting) a message to the smartphone (portable terminal device) carried by the user in order to confirm the operation such as whether the air conditioner is kept in operation in a case where there is no person in the building and only a pet is there, or whether the air conditioner is automatically operated based on a detected temperature in a case where the air conditioner is turned off.

Further, for example, the control signal may be automatically output as [going-out mode (lock check)] using a learning function to refer to the control pattern which is stored in the past execution. In this case, it is possible to prepare a plurality of control patterns which are classified based on the control pattern such as "going-out mode (night)" and "going-out mode (day)". In addition, it is possible to prepare a plurality of patterns such as "going-out mode (day - summer)" and "going-out mode (day - winter)" with respect to the control pattern such as "going-out mode (day)".

Further, the control pattern referred by the learning function may be stored in the server 1100, or may be stored in the HGW 600. In addition, the learning function may be prepared in the control data management module 601 in advance. For example, the learning function may be stored in the recording medium 1110, and developed on a memory (work memory) in the control data management module 601 and executed by a CPU in the control data management module 601 in a case where there is a read request from the control data management module 601.

In a case where the control word is "Good night" or "Have a nice dream", it is checked, for example, whether the off-timer is set, or whether brightness adjustment (not turning off) is instructed. For example, in a case where the off-timer is set, the light (switch) is turned off at a time point of detecting that the counting (time managed by the timer) of the off-timer is expired. For example, in a case where the brightness adjustment is instructed, a level set in the light (switch) is read and the brightness is set to the level. As a method of adjusting the brightness, it is possible to use a scheme to vary power to be supplied to the light by setting a value (duty) of a pulse width modulation (PWM) of an inverter for example.

Further, the above procedure of recognizing the control word to determine the intention is performed by a voice processing unit 400 which is provided separately from the HGW 600 as illustrated in FIG. 18, or may be performed by the control data management module 601 in the HGW 600.

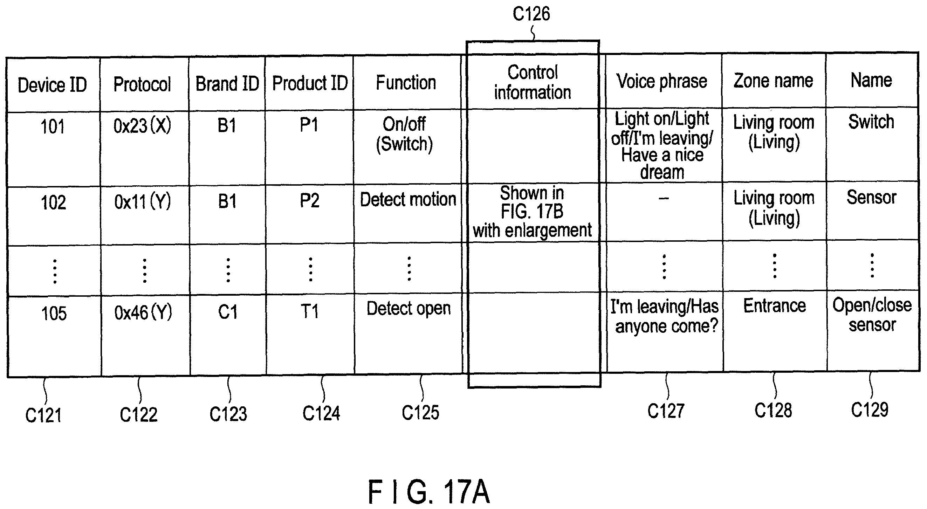

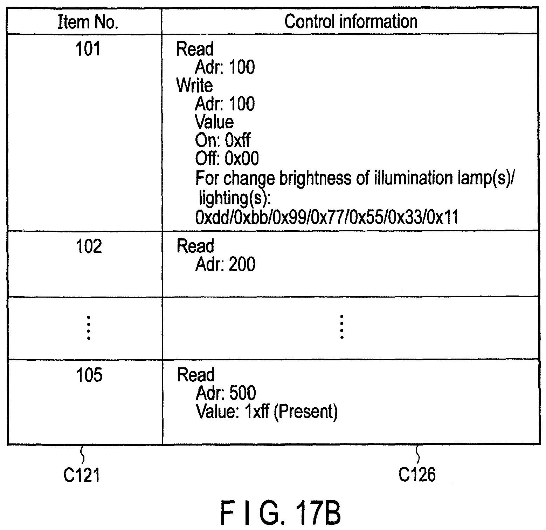

FIGS. 17A and 17B illustrate an example of control information (data table) of a sensor. The data table of the control information of the sensor illustrated in FIGS. 17A and 17B is, for example, placed in an external server, and contains the columns C121 to C129.

The column C121 contains the device ID for every unique device in the home network 1000. The device ID indicates a correspondence relation with respect to an arbitrary device listed in the data table of the feature information of the sensor illustrated in FIGS. 15A, 15B, 15C, 15D and 15E. The device ID is linked to the feature information of the sensor listed in FIGS. 15A, 15B, 15C, 15D and 15E, and uses the same number as that of the device ID illustrated in FIGS. 16A, 16B, and 16C.

The column C122 contains information related to a standard of radio communication to which an arbitrary device corresponds. The column C123 contains the unique product name of the device. The column C124 contains information which is used to uniquely specify the function of the device (that is, the product name (product specification)). Further, the information listed in the columns C123 and C124 is the same information as that listed in the columns C102 and C103 in FIG. 15A, and thus a correspondence with respect to the feature information of the device (sensor) illustrated in FIGS. 15A, 15B, 15C, 15D and 15E can be secured.

The column C125 contains the function of the device and the information related to the control method. The column C126 contains the information related to the control method for realizing the function of the device. Further, the information listed in the columns C125 and C126 is the same information as that in the columns C106 and C107 in FIGS. 15A, 15B, and 15C, and thus a correspondence with respect to the feature information (data table) of the sensor illustrated in FIGS. 15A, 15B, 15C, 15D and 15E can be secured.

The column C127 contains information related to various replacements (rephrases) in a case where the registered name and/or the nickname (of the device) is instructed by voice. In other words, the registered device can be specified in a case where the subject device is instructed with the given name assigned as various names based on the information which is registered in the column C127 and related to the replacements (rephrases) listed in the column C127.

The column C128 contains the zone names of the respective zones listed in the column C115 in FIG. 16A.

The column C129 contains the information which can uniquely specify the function of the device (that is, the product name (product specification)).

Hereinafter, the control of various devices in the home network 1000 through the HGW 600 will be described based on the information described in FIGS. 14, 15A, 15B, 15C, 15D, 15E, 16A, 16B, 16C, 17A, and 17B.

An arbitrary device (that is, the detection mechanism (sensor) and the control target device) can be controlled by the control word (the respective phrases of the control word) through the HGW 600 in the home network 1000 which includes the HGW 600 by combining the information illustrated in FIGS. 14, 15A, 15B, 15C, 15D, 15E, 16A, 16B, 16C, 17A, and 17B.

Herein, the subject device (control target) can be specified by specifying the given name as various names assigned to an arbitrary device listed in the intention interpretation data table from the phrase contained in the control word. The respective control targets (devices) and phrases can correspond to various replacements (rephrases) so that the name can be uniquely identified even in a case where "spot light" is called "light" or "spot", or "car barn" is called "garage" or "outside (entrance)". Further, the name of the already-used device (sensor) is also stored in the data table in association with the uniquely-identifiable name or information for rephrasing the name in order to handle various replacements (rephrases). The name or the information for replacing the name is desirably prepared many. In addition, the data table contains the control information necessary for controlling the device by voice by associating the phrase indicating the control intention and the control information of the device according to the phrase.

In other words, the phrase indicating the control intention can be extracted from the data table by recognizing the device using the uniquely-identifiable name of the device and the information. In this way, the information (name) of the recognized device is linked to the phrase (control word) indicating the control intention, and the HGW 600 generates the control information to control the control target device using the syntax "<IF> - <THEN>". Further, the generated control information is registered as a dictionary to make it possible to be linked to various replacement (rephrase) information. Naturally, the dictionary may be also updated.

In addition, the HGW 600 determines whether the syntax <IF> can be used to define or whether the syntax <THEN> can be used to define based on the feature of the input information (information of the recognized device). Furthermore, in the case of the syntax <IF>, information indicating whether there is a condition (information for controlling the control target), and which information should be acquired from the device to determine the condition can be acquired from the data table. Further, in a case where an indoor temperature of the zone 23 (see FIG. 1) where a pet stays reaches the predetermined temperature, the syntax <THEN> may be set in advance to operate the air conditioner which can cool down the zone. In this case, it is possible to monitor (using the syntax <IF>) whether the output from which device (sensor) reaches the predetermined temperature. In addition, the syntax <IF> (that is, the temperature rise of the zone 23) may be detected based on the outputs of two or more sensors (temperature sensor, sunshine sensor, etc). Naturally, in a case where the temperature of the zone 23 is lowered than the predetermined temperature, the zone 23 may be warmed by the air conditioner (the air conditioner is operated in a warming mode). In this case, as a control command to the air conditioner, control commands may be separately used for the control command "cool down (turn on cooling)" and the control command "warming up (turn on warming)" like the setting of an automatic mode (air conditioner). For example, the temperature of the zone 23 may fall within a range from 20°C to 29°C by setting an upper temperature and a lower temperature with respect to the center temperature such as "temperature setting, zone 23, 25°C +4°C/-5°C".

Further, in a case where the user sets a rule related to the operation of the device (sensor), the registration is desirably made easy by automatically generating a selection list. In addition, in a case where the device (sensor) has a plurality of functions, it is desirable that the name be assigned to every function and the intention interpretation be implemented for a combination setting of <IF> and <THEN> and for the control. In other words, in a case where two or more syntaxes <THEN> are present with respect to one <IF>, the syntax <IF> is defined for each of the syntaxes <THEN>. In addition, when two or more syntaxes <THEN> are present with respect to the syntax <IF> even in a case where the device (sensor) has one function, the syntax <IF> is defined for each of the syntaxes <THEN>.

In addition, in a case where the device (sensor) is initially registered, the HGW 600 can sequentially accumulate the position information output by the device can learn while updating when an installation place of the device and the own device (HGW 600) are paired (registered) with each other. The position information includes, for example, the longitude, the latitude, and the altitude which are detected by an input device (for example, the smartphone (or the portable terminal device such as a table PC) carried by the user) at the time of registration. The position information desirably displays in advance the information of the nearest zone based on the longitude, the latitude, and the altitude which are detected by the input device at a time point when the next device (sensor) is registered (paired). Further, at the time of registering the device, the data (feature information) indicating the feature of the device, the information (control information) for controlling the device, and the nickname (user setting) of the device are desirably associated to each other and displayed as initial values in the display region 501 of the portable terminal device 500.

In addition, the information of the respective device (sensor) is transferred by the HGW 600, and various information provided from the sensor (device) to the HGW 600 is combined, so that various rules (cooperating operation) can be performed in the space illustrated in FIG. 1.

For example, a "Lock check" rule will be considered. This rule is activated (performed) before leaving house or before sleeping. In a case where the control word uttered by the user is "I'm leaving", the HGW 600 determines that the "Lock check (going-out)" rule is to activate, and performs the rule. In a case where the control word uttered by the user is "Good night" or "Have a nice dream", the HGW 600 determines that the "Lock check (sleeping)" rule is to activate, and performs the rule. Further, the "Lock check (going-out)" rule may be referred to as rule G. Similarly, the "Lock check (sleeping)" rule may be referred to as rule S.

In a case where the rule G ("Lock check (going-out)" rule) is activated, the current position of the user is specified based on the output of an arbitrary sensor (motion detection sensor). In a case where the current position of the user is specified, the position information provided from the portable terminal device (smartphone) carried by the user may be used for example. In a case where the current position of the user is specified using the motion detection sensor, the position information from the smartphone may be used together.

In the rule G, the output of the sensor (open/close sensor) prepared in a window is referred at the same time when the current position of the user is specified, or at an arbitrary timing. Further, as illustrated in FIG. 1, in a case where the target space includes a door which is usable to go in and out with respect to an open space 32 connected to the outside, the output of the open/close sensor prepared in the door is also referred.

In a case where the output from an arbitrary sensor (for example, a sensor which detects open/close of a window) is [Open], the HGW 600 placed at a position where the voice output is able to be delivered (heard) up to the user or a near position thereof outputs a message such as "Window of oo may be not closed. Please check it". In a case where the HGW 600 placed at a position where the voice output is able to be delivered (heard) up to the user or a near position thereof has no voice output mechanism, it is desirable that an alert indicating "Window of zone HI may be not closed. Please check it" be displayed in the display region 501 of the portable terminal device (smartphone) 500 carried by the user. Further, since the smartphone 500 normally has a voice reproducing function (synthesized voice output), the above alert can be provided by voice. In addition, in a case where the alert is provided by voice, it is possible to provide a user friendly alert using a spoken voice such as "Window of oo's room (zone HI) is opened".

In the rule G, in a case where it is confirmed that a window and a door available to go in and out with respect to the open space, the light (illumination) of the zone (room) where it is already detected that the user does not stay is turned off. Further, in a case where it is detected that one of family members except the user or a pet remains in any room (zone), it is possible to wait a feedback from the user about the room of which the light is to be turned off as described above. Thus, it is possible to suppress that the illumination (light) is uniformly turned off in a case where someone does not go out but remains in the house. On the other hand, in a case where only a pet is left, it is possible to control to lay the pet to rest (sleep) by turning off the illumination. In this case, the air conditioner may be turned on or the heater (warming) may be turned on based on a condition of daily weather and zone. In addition, in a case where a lock mechanism of a door or a window is able to be locked by a remote control from the HGW 600 and the smartphone 500, the lock mechanism may be locked in a predetermined timing after the door and the window are checked to be closed.

In the rule G, in a case where it is checked that there is no person in the building after the user goes out, the position of the user is detected based on the position information from the smartphone 500 carried by the user, and the lights of the zones where the user passed through may be sequentially turned off. Further, the determination on whether one of the family member except the user remains or goes out may be confirmed by checking the position information of the smartphone carried by each member or by the fact that the smartphones are not recognized in the wireless LAN in the building.

Hereinafter, in a case where it is detected that the user opens the door of the entrance and closes the door after a predetermined time period elapses, all the illuminations in the space (building) are turned off. Further, in a case where it is detected that the door is closed, and the door is not locked in a predetermined time period, an alert urging the user to lock the door may be presented to the user. In addition, in a case where the lock mechanism of the door can be locked by the remote control from the HGW 600 or the smartphone 500, the door may be locked at a predetermined timing after it is detected that the user stays out of the space (building). Further, in a case where an image of the outer place (that is, the site 1) of the space (building) can be acquired (the monitor camera is prepared at the site 1), the "going-out" mode may be activated at a time point when the fact that the user goes out from the site 1 to the other site is specified by an image processing and an image recognition of the image of the camera. In addition, the user may go out without carrying with the smartphone. In that case, the door may be locked at a predetermined timing after the motion detection sensor detects that a vehicle (or automobile or a motorcycle) goes out from the garage (the space 11 in FIG. 1). Further, in a case where the fact that the user goes out from the site 1 to the other site can be specified by the image processing and the image recognition of the image of the camera which acquires the image of the site 1, the door may be locked.

By the way, as described above, it is possible to detect that the user goes out to the outside of the site 1 can be detected by the image processing and the image recognition of the image of the camera which acquires the image of the site 1 even in a case where the user goes out without carrying with the smartphone. However, in a case where the user (who went out without carrying with the smartphone) goes home and enters the site 1, it may be not possible to determine whether the person is a visitor or the user. Therefore, in a case where the output of the sensor (open/close sensor) prepared in the door of the entrance (zone 12) is changed after it is detected that someone enters the site 1, the HGW 600 may notify an alert "Someone came?" to another HGW in the building. In this case, in a case where the detected target in the site 1 is a suspicious person, the voice output is desirably stopped to prevent the operation of the HGW 600 from being intentionally stopped (by a suspicious person). In addition, in a case where the camera (sensor) 611 is activated and acquires a video in the site 1, it is desirable to keep on capturing in an infrared capture mode without lighting on a flash light even at night for example. Further, in a case where the output from the sensor (open/close sensor) prepared in the door of the entrance (zone 12) is not changed after it is detected that someone enters the site 1, it is also possible to recognize that a suspicious person breaks into the site. In this case, it is desirable that the breaking-in (to the site) of a next-door pet (for example, a cat) and the breaking-in of a suspicious person be obviously identified. Therefore, it is desirable that a number of types of the image data which can be referred from the database and a number of databases be connected in order to identify a pet by the image processing and the image recognition of the image of the camera which acquires the image of the site 1.

Further, even in the rule G, it is a matter of course that the above learning function is referred, and various control patterns are applicable.

In a case where the rule S ("Lock check (sleeping)" rule) is activated, the current position of the user is specified based on the output of an arbitrary sensor (motion detection sensor). In a case where the current position of the user is specified, the position information provided from the portable terminal device (smartphone) carried by the user may be used for example. In a case where the current position of the user is specified using the motion detection sensor, the position information from the smartphone may be used together.

In the rule S, the outputs of the sensor (open/close sensor) prepared in the window and the sensor (open/close sensor) prepared in the door of the entrance (zone 12 in FIG. 1) are referred at the same time when the current position of the user is specified, or at an arbitrary timing. Further, as illustrated in FIG. 1, in a case where the target space include a door which is usable to go in and out with respect to an open space 32 connected to the outside, the output of the open/close sensor prepared in the door is also referred.

In a case where the output from an arbitrary sensor (for example, a sensor which detects open/close of a window) is [Open], the HGW 600 placed at a position where the voice output is able to be delivered (heard) up to the user or a near position thereof outputs a message such as "Window of oo may be not closed. Please check it". In a case where the HGW 600 placed at a position where the voice output is able to be delivered (heard) up to the user or a near position thereof has no voice output mechanism, it is desirable that an alert indicating "Window of zone HI may be not closed. Please check it" be displayed in the display region 501 of the portable terminal device (smartphone) 500 carried by the user. Further, since the smartphone 500 normally has a voice reproducing function (synthesized voice output), the above alert can be provided by voice. In addition, in a case where the alert is provided by voice, it is possible to provide a user friendly alert using a spoken voice such as "Window of oo's room (zone HI) is opened".

However, it may be considered that a window (see FIG. 1) used for the purpose of ventilation such as the window of the zone 33 which is the high window with respect to the living room (zone) 23 of the second floor of the building of FIG. 1 may be not completely closed. In such a case, the HGW 600 may wait for an instruction from the user through a feedback. Further, for example, in a case where heavy rain (Rainy, cats and dogs (are run)) or a strong wind is expected from a weather forecast, a message such as "Let's close also the high window today" may be presented to the user (smartphone).

In the rule S, in a case where it is confirmed that a window or a door is closed, the light (illumination) of the zone (room) which is already detected as that the user does not stay is turned off. Further, in a case where the lock mechanism of a door or a window is lockable by the remote control from the HGW 600 or the smartphone 500, the door or the window may be locked at a predetermined timing after the closed state of each device is checked. Further, in a case where it is confirmed that one of the family member except the user stays in the building based on the position information of the smartphone carried by each member, the (own) smartphone carried by the user may instruct (transmit) a message for the other family members such as "Cause I go to sleep first" to the HGW 600.

Further, even in the rule S, it is a matter of course that various control patterns of referring to the learning function is applicable.

Further, the association between the control word and the rule and the registration (recording) of the operation pattern of the actual device described using FIGS. 15A, 15B, 15C, 15D, 15E, 16A, 16B, 16C, 17A, and 17B are sequentially and automatically updated whenever a new device (sensor) is added through the "device registration" process described using FIGS. 13D, 13E, and 13G. In other words, when a device is added, the feature of the added device is read from the feature information illustrated in FIGS. 15A, 15B, 15C, 15D and 15E. From the read-out feature, the operation (rule) of the added device is specified based on the intention interpretation (rule) illustrated in FIGS. 16A, 16B, and 16C. In other words, the operations of the device corresponding to the various control words are specified. Therefore, the position of the device and the actual operation of the device are associated as illustrated in FIGS. 17A and 17B. In other words, in a case where a sensor (device) is added in the embodiment, a rule may be automatically created based on the feature (nature) of the added sensor, and be added to the data table.

FIGS. 19A, 19B and 19C illustrate an example of a registration procedure in the "device registration" mode in a case where a network standard of radio communication (a communication standard suitable to the device) used by the device to be registered complies with IEEE 802.15.4 and is [type B <zigbee> using a radio wave of the 2.4 GHz band.

FIG. 19A is an exemplary display at the time of registering the device which is activated in the "device registration" mode, and illustrates a state where the current position of the user is two-dimensionally displayed from Symbol 1541 in the "room layout (plan)" 1551 which is registered in the "room layout creation" mode described using FIGS. 4, 5, 6, 7 and 8. In addition, it is desirable that a message 1535 such as "Please move near to the device to be registered" be displayed in the display region 501, and urge the user to specify a device to be registered. Further, in a case where the device is [type B], and there are a plurality of registrable devices, each of the registrable devices is displayed in the "room layout" 1551. In other words, when the "device registration" mode is activated, the rough positions of the registration target devices 1561, 1562, 1563, ..., 1565 placed nearby are displayed in the "room layout" 1551 as illustrated in FIG. 19A. Further, the registration target devices 1564 and 1565 illustrated in FIG. 19A cannot be seen by the user who tries to register the devices (the devices cannot be seen from the user), and placed at a position in the zones (1 and 11) except the zone 11. In addition, while not illustrated in FIG. 19A, rough positions of the registration target devices placed in the second floor 20 illustrated in FIG. 2B or in the third floor 30 illustrated in FIG. 2C are displayed by scrolling a range shoring the display region 501.

When the user moves near to the device to be registered (the device 1561 will be described for example), and the user recognizes the device 1561 and registers and couples the device 1561 as the target device (by the user) (a communication with respect to the terminal device [smartphone] 500 carried by the user is established), the state that the "room layout" 1551 displays the position 1543 of the user and the position of the device 1561 is updated as illustrated in FIG. 19B. At this time, as illustrated in FIG. 19C, an image (Image) showing a rough shape of the device 1561 and/or the product name for each standard function such as a switch (On/Off switch), a sensor (Motion sensor), a sensor (Open/close sensor), and a socket (Electrical outlet/Receptacle outlet), a product specification, and/or an individual name (model number) prepared by a provider are desirably read out of the feature table illustrated in FIG. 15 and displayed in a list 1570 in the display region 501 for example. Further, in FIG. 19C, the rules related to displaying the display positions, an display order, overlapping, and transparency/non-transparency at the time of overlapping of the list 1570, the "room layout" 1551, the message 573, and/or the button 525 are arbitrary. In addition, a display size is set in accordance with the size of the display region 501, and a display amount per one screen display is controlled, and all the screen displays are desirably displayed by scrolling the screen.

Further, as illustrated in FIG. 19C, subsequently, a message 1571 such as "Do you want to register this device?" and the button 525 to accept an instruction input such as [register], [yes], [restart], or [cancel] are displayed in the display region 501 for example.

In a case where the instruction input (tap) from the user with respect to the screen display illustrated in FIG. 19C is [register] or [yes], the "device registration" procedure based on the registration of the device of type A already described using FIGS. 13D, 13E, and 13G is sequentially performed. In addition, in a case where the name of the device input by the user in the "device registration" procedure is already present, the message 576 to urge the user to avoid registering the duplicate name such as "The device having the same name is already registered. Input another name" is desirably displayed similarly to the case described using FIG. 13F.

Further, even in a case where the device of [type B] cannot directly communicate between the own device and the HGW 600, the signal from the HGW 600 to the own device and the signal from the own device to the HGW 600 can be hopped (relayed) by setting another device of [type B] as a relay device. Thus, it is possible to suppress the communication performance of each device of [type B], and a network having less power consumption can be established.

FIGS. 20A, 20B and 20C illustrate an example of the registration procedure in the "device registration" mode in a case where a network standard of the radio communication (a communication standard suitable to the device) used by the device to be registered complies with IEEE 802.15.1 and is [type C <Bluetooth>] using a radio wave of the 2.4 GHz band.

FIG. 20A is an exemplary display at the time of registering the device which is activated in the "device registration" mode, and illustrates a state where the current position of the user is two-dimensionally displayed from Symbol 2541 in the "room layout (plan)" 2551 which is registered in the "room layout creation" mode described using FIGS. 4 to 8. Further, in a case where the device is [type C], and there are a plurality of registrable devices, identifiers (for example, a media access control (MAC) address or a product code) of the respective registrable devices are listed in the "room layout" 2551.

In other words, when the "device registration" mode is activated, the identifiers of the registration target devices placed nearby are displayed in the "room layout" 2551 without specified in their positions as illustrated in FIG. 20A. In addition, the identifiers of the registration target devices illustrated in FIG. 20A are listed even with respect to the registration target devices placed in the second floor 20 illustrated in FIG. 2B and in the third floor 30 illustrated in FIG. 2C. Therefore, a message 2536 such as "Select a device to be registered" is necessarily displayed in the display region 501 to urge the user to specify the device to be registered.

When registering a device of type C, first, the user recognizes the device to be registered (for example, the device 2561), and couples the device 2561 as a registration target device (a communication with respect to the terminal device [smartphone] 500 carried by the user is established).

When the communication with respect to the terminal device is established in the registration target device of the user, the "room layout" 2551 is updated to a state where a position 2541 of the user and the position of the device 2561 are displayed as illustrated in FIG. 20B.

At this time, as illustrated in FIG. 20C, an image (Image) showing a rough shape of the device 2561 and/or the product name for each standard function such as a switch (On/Off switch), a sensor (Motion sensor), a sensor (Open/close sensor), and a socket (Electrical outlet/Receptacle outlet), a product specification, and/or an individual name (model number) prepared by a provider are desirably read out of the feature table illustrated in FIG. 15 and displayed in a list 2570 in the display region 501 for example. Further, in FIG. 20C, a rule related to the display such as display positions, an display order, overlapping, and transparency/non-transparency at the time of overlapping of the list 2570, the "room layout" 2551, the message 573, and/or the button 525 are arbitrary. In addition, a display size is set in accordance with the size of the display region 501, and a display amount per one screen display is controlled, and all the screen displays are desirably displayed by scrolling the screen. Further, as illustrated in FIG. 20C, subsequently, a message 2571 such as "Let register a device" and the button 525 to accept an instruction input such as [register], [yes], [restart], or [cancel] are displayed in the display region 501 for example.

In a case where the instruction input (tap) from the user with respect to the screen display illustrated in FIG. 20C is [register] or [yes], the "device registration" procedure based on the registration of the device of type A already described using FIGS. 13D, 13E, and 13G is sequentially performed. In addition, in a case where the name of the device input by the user in the "device registration" procedure is already present, the message 576 to urge the user to avoid registering the duplicate name such as "The device having the same name is already registered. Input another name" is desirably displayed similarly to the case described using FIG. 13F.

Although several embodiments according to the present invention have been described, these embodiments are presented as examples, and they are not intended to restrict the scope of the present invention. These novel embodiments can be carried out in other various conformations, and diverse omissions, substitutions, and changes can be carried out without departing from the gist of the present invention. These embodiments or their modifications are included in the scope or the gist of the present invention, and they are also included in the invention described in claims and its equivalent scope.

## Claims

1. A home network (1000) **characterized by** comprising:
an information processing module (600) which specifies a device to be operated in association with input information, and outputs a control signal to control an operation of the device; and
a storage (1100) which stores a condition for the information processing unit to control the operation of the device and information to specify the device based on the input information.

2. The home network of claim 1,
**characterized in that**
the information processing module is automatically movable.

3. The home network claim 1 or 2,
**characterized in that**
the information processing module acquires the condition to control the operation of the device and the information to specify the device based on the input information by voice.

4. The home network of any one of claims 1 to 3,
**characterized in that**
the information processing module specifies "if ..." or "when ...", "do ---" from the condition to control the operation of the device.

5. The home network of any one of claims 1 to 4,
**characterized in that**
the information processing module adds the condition to control the operation of the device and the information to specify the device based on the input information in the storage in a case where the device is not yet registered.

6. An electronic device (600) **characterized by** comprising:
a first processing module (602) which specifies a device to be operated in association with input information; and
a second processing module (601) which outputs a control signal to control an operation of the device.

7. A processing device (600) of **characterized by** comprising:
a home gateway (605) which is connected to a home network;
a system controller (601, 602, 603) which is provided in the home gateway, and outputs a command signal to a plurality of control target devices; and
a storage (602) which stores source data for establishing the command signal with respect to the control target devices,
**characterized in that**
the source data includes zone identification data that is obtained by partitioning a room in at least a home, position data that indicates a position in the partitioned zone, and device identification data of a control target device that is disposed at the position.

8. The processing device of claim 7,
**characterized in that**
the home gateway further includes a microphone (613), and
the system controller specifies the source data based on a voice phrase that is input from the microphone, and creates the specified command signal.

9. The processing device of claim 8,
**characterized in that**
the source data includes a control frame corresponding to the voice phrase that is input from the microphone, the zone identification data, the position data, and the registered device identification data.

10. A display method **characterized by** comprising:
displaying acquired position information based on movement trace data; and
displaying the position information and information of a device in the same display to register a device that operates in a predetermined communication method in the display.

11. The display method of claim 10,
**characterized in that**
the movement trace data is acquired by moving a displaying device.
